# EUROPEAN PATENT APPLICATION

(11) **EP 4 615 059 A1**
(43) Date of publication of application: **10.09.2025**
(21) Application number: 23890609.3
(22) Date of filing: 01.11.2023
(51) Int. Cl.: H04W 48/16

(54) **WIRELESS COMMUNICATION METHOD, STORAGE MEDIUM, AND TERMINAL DEVICE**

(30) Priority: 18.11.2022 CN 202211448766
(71) Applicant: Huawei Technologies Co., Ltd., Shenzhen, Guangdong 518129 (CN)
(72) Inventor: LU, Junxin, Shenzhen, Guangdong 518129 (CN)
(74) Representative: Gill Jennings & Every LLP
(86) International application number: PCT/CN2023/129117
(87) International publication number: WO 2024/104173

(57) **Abstract**

This application relates to the field of communication technologies, and discloses a wireless communication method, a storage medium, and a terminal device. The method includes: identifying, by using a stored first Wi-Fi fingerprint, a Wi-Fi device that is detected through scanning when a terminal device historically accesses a Wi-Fi network. **In** a process in which the terminal device performs Wi-Fi scanning in a first scanning manner, for example, in a process in which the terminal device is disconnected from the Wi-Fi network and needs to re-scan and be connected to the network, when a Wi-Fi device detected through scanning by the terminal device include the Wi-Fi device detected through scanning when the terminal device historically accesses the Wi-Fi network, it may be determined that the terminal device is currently close to a location at which the terminal device historically accesses the Wi-Fi network, and the terminal device may shorten scanning time, thereby increasing a Wi-Fi scanning frequency, and improving efficiency of re-accessing the Wi-Fi network by the terminal device.

## Description

This application claims priority to Chinese Patent Application No. 202211448766.7, filed with the China National Intellectual Property Administration on November 18, 2022 and entitled "WIRELESS COMMUNICATION METHOD, STORAGE MEDIUM, AND TERMINAL DEVICE", which is incorporated herein by reference in its entirety.

### TECHNICAL FIELD

This application relates to the field of communication technologies, and in particular, to a wireless communication method, a storage medium, and a terminal device.

### BACKGROUND

In a wireless fidelity (Wireless-Fidelity, Wi-Fi) communication system, to discover a network device, a terminal device periodically performs full-channel scanning, to scan whether there is an accessible network device near the terminal device. When the terminal device detects, through scanning, a Wi-Fi network provided by a specific network device and accesses the Wi-Fi network, the terminal device may store authentication information used when accessing the network device. When the terminal device is disconnected from the Wi-Fi network and re-detects the network device through scanning, the terminal device may obtain the authentication information corresponding to the network device from a storage record, to initiate authentication to the network device, so that the terminal device can be automatically reconnected to the Wi-Fi network provided by the network device.

However, currently, a scanning periodicity of the terminal device is long. For example, a maximum scanning periodicity of the terminal device in a standby state may be 300 seconds. As a result, reconnection efficiency of the terminal device is poor. In addition, full-channel scanning causes the terminal device to switch between a plurality of Wi-Fi channels for scanning, resulting in high scanning power consumption of the terminal device, and affecting performance of the terminal device.

### SUMMARY

Embodiments of this application provide a wireless communication method, a storage medium, and a terminal device, to identify, by using a stored Wi-Fi fingerprint and a stored cell identity, a Wi-Fi device that is detected through scanning when the terminal device historically accesses a Wi-Fi network, so that when the terminal device is not connected to the Wi-Fi network, the terminal device switches a Wi-Fi scanning manner by using the Wi-Fi fingerprint and the cell identity, to reduce power consumption of Wi-Fi scanning of the terminal device, and improve efficiency of re-accessing the Wi-Fi network by the terminal device.

According to a first aspect, this application provides a wireless communication method. The method includes: A terminal device performs Wi-Fi scanning in a first scanning manner, where a matching relationship between a Wi-Fi device detected through scanning by the terminal device and a Wi-Fi device in a stored first Wi-Fi fingerprint meets a first matching condition; and the terminal device performs Wi-Fi scanning in a second scanning manner, where a scanning interval of the first scanning manner is greater than a scanning interval of the second scanning manner.

In this embodiment of this application, the first scanning manner indicates that Wi-Fi scanning is performed in a periodicity 001, and the second scanning manner indicates that Wi-Fi scanning is performed in a periodicity 002. The Wi-Fi device that is detected through scanning is identified by the stored first Wi-Fi fingerprint when the terminal device historically accesses a Wi-Fi network. In a process in which the terminal device performs Wi-Fi scanning in the first scanning manner, for example, in a process in which the terminal device is disconnected from the Wi-Fi network and needs to re-scan and be connected to the network, when the Wi-Fi device detected through scanning by the terminal device include the Wi-Fi device detected through scanning when the terminal device historically accesses the Wi-Fi network, it may be determined that the terminal device is currently close to a location when the terminal device historically accesses the Wi-Fi network, and the terminal device may shorten scanning time, thereby increasing a Wi-Fi scanning frequency, and improving efficiency of re-accessing the Wi-Fi network by the terminal device.

In a possible implementation of the first aspect, the first Wi-Fi fingerprint is determined by using the following method: The terminal device accesses a first Wi-Fi signal provided by a first Wi-Fi device; obtains a plurality of second Wi-Fi devices detected through scanning by the terminal device; and determines the first Wi-Fi fingerprint based on the first Wi-Fi device and the plurality of second Wi-Fi devices.

In this embodiment of this application, the first Wi-Fi device indicates a target network device, and the second Wi-Fi device indicates an associated network device. When the terminal device detects through scanning and accesses a Wi-Fi network provided by a specific network device, the terminal device records all network devices currently detected through scanning by the terminal device. In all network devices, a network device currently accessed by the terminal device is used as the first Wi-Fi device, a network device that is not accessed by the terminal device is used as the second Wi-Fi device, and the first Wi-Fi fingerprint is generated based on the first Wi-Fi device and the plurality of second Wi-Fi devices.

In a possible implementation of the first aspect, the first Wi-Fi fingerprint is determined by using the following method: The terminal device accesses, at first time, a first Wi-Fi signal provided by a first Wi-Fi device; obtains a plurality of second Wi-Fi devices detected through scanning by the terminal device at the first time; and determines the first Wi-Fi fingerprint based on the first Wi-Fi device and the plurality of second Wi-Fi devices.

In this embodiment of this application, the first time indicates time at which the terminal device accesses the first Wi-Fi signal provided by the first Wi-Fi device. The Wi-Fi fingerprint for the first Wi-Fi device may be collected at time at which the terminal device accesses the first Wi-Fi signal provided by the first Wi-Fi device.

In a possible implementation of the first aspect, the method further includes: The terminal device is disconnected, at second time, from the first Wi-Fi signal provided by the first Wi-Fi device; and uses, as the second Wi-Fi devices, a plurality of Wi-Fi devices that are detected through scanning by the terminal device at the second time, to update the first Wi-Fi fingerprint.

In this embodiment of this application, the second time indicates time at which the terminal device is disconnected from the first Wi-Fi signal provided by the first Wi-Fi device. Alternatively, the Wi-Fi fingerprint for the first Wi-Fi device may be collected at time at which the terminal device is disconnected from the first Wi-Fi signal provided by the first Wi-Fi device.

In a possible implementation of the first aspect, that a matching relationship between a Wi-Fi device detected through scanning by the terminal device and a Wi-Fi device in a stored first Wi-Fi fingerprint meets a first matching condition includes: The Wi-Fi device detected through scanning by the terminal device includes all or a part of the plurality of second Wi-Fi devices.

In this embodiment of this application, when the matching relationship meets the first matching condition, which indicates that the Wi-Fi device detected through scanning by the terminal device include the second Wi-Fi devices detected through scanning when the terminal device historically accesses the first Wi-Fi device, it may be determined that the terminal device is currently close to a location at which the terminal device historically accesses the first Wi-Fi signal provided by the first Wi-Fi device.

In a possible implementation of the first aspect, the method further includes: In correspondence to a case in which the matching relationship between the Wi-Fi device detected through scanning by the terminal device and the Wi-Fi device in the stored first Wi-Fi fingerprint does not meet the first matching condition, the terminal device performs Wi-Fi scanning in the first scanning manner.

In this embodiment of this application, when the matching relationship does not meet the first matching condition, which indicates that there is no first Wi-Fi device that is not historically accessed near a location at which the terminal device is currently located, the terminal device cannot automatically access the Wi-Fi network. Therefore, the periodicity 001 with long interval scanning time is used to perform Wi-Fi scanning, so that scanning power consumption of the terminal device can be reduced.

In a possible implementation of the first aspect, that a terminal device performs Wi-Fi scanning in a first scanning manner includes: When the Wi-Fi device detected through scanning by the terminal device includes the first Wi-Fi device, the terminal device accesses the first Wi-Fi signal provided by the first Wi-Fi device; or when the Wi-Fi device detected through scanning by the terminal device do not include the first Wi-Fi device, the terminal device determines whether the matching relationship between the Wi-Fi device detected through scanning by the terminal device and the Wi-Fi device in the stored first Wi-Fi fingerprint meets the first matching condition.

In a possible implementation of the first aspect, that the terminal device performs Wi-Fi scanning in a second scanning manner includes: In correspondence to a case in which the Wi-Fi device detected through scanning by the terminal device includes the first Wi-Fi device, the terminal device accesses the first Wi-Fi signal provided by the first Wi-Fi device.

In a possible implementation of the first aspect, Wi-Fi channels supported by Wi-Fi scanning of the terminal device include a plurality of first Wi-Fi channels; and the first scanning manner includes: performing Wi-Fi scanning based on the plurality of first Wi-Fi channels.

In this embodiment of this application, the plurality of first Wi-Fi channels may be a combination of any Wi-Fi channels that are available to the terminal device in 2.4 GHz and 5 GHz operating frequency bands, or the plurality of first Wi-Fi channels may be all Wi-Fi channels supported by the terminal device by performing Wi-Fi scanning. The first scanning manner indicates that Wi-Fi scanning is performed in the periodicity 001 by using the plurality of first Wi-Fi channels. Because the terminal device is in a state of being not connected to the Wi-Fi network when using the first scanning manner, the plurality of first Wi-Fi channels (a full-channel scanning manner) in the periodicity 001 are used, so that efficiency of scanning the Wi-Fi device by the terminal device can be improved.

In a possible implementation of the first aspect, a Wi-Fi channel used by the terminal device to access the first Wi-Fi signal provided by the first Wi-Fi device is a second Wi-Fi channel, and the second Wi-Fi channel is any one of the plurality of first Wi-Fi channels; and the second scanning manner includes: performing Wi-Fi scanning based on the second Wi-Fi channel.

In this embodiment of this application, the second Wi-Fi channel indicates a target channel. After determining that the terminal device is currently close to a location at which the terminal device historically accesses the first Wi-Fi signal provided by the first Wi-Fi device, the terminal device may switch from the plurality of first Wi-Fi channels (a full-channel scanning manner) to the second Wi-Fi channel (a single-channel scanning manner), to reduce scanning power consumption and ensure scanning and searching of the first Wi-Fi device.

In a possible implementation of the first aspect, that the terminal device performs Wi-Fi scanning in a second scanning manner includes: The terminal device obtains a first quantity of scanning times of performing Wi-Fi scanning by the terminal device based on the second Wi-Fi channel; and in correspondence to a case in which the first quantity of scanning times does not exceed a first threshold, the terminal device performs Wi-Fi scanning in the second scanning manner; or in correspondence to a case in which the first quantity of scanning times exceeds the first threshold, the terminal device performs Wi-Fi scanning in the first scanning manner.

In this embodiment of this application, when the terminal device does not detect the first Wi-Fi device through scanning, and the first quantity of scanning times of the second Wi-Fi channel does not exceed the first threshold, it may indicate that the terminal device carried by a user may move in a direction close to the first Wi-Fi device, and the terminal device continues to perform Wi-Fi scanning in the second scanning manner. When the terminal device does not detect the first Wi-Fi device through scanning, and the first quantity of scanning times of the second Wi-Fi channel exceeds the first threshold, it indicates that the terminal device carried by the user may move in a direction away from the first Wi-Fi device, so that the terminal device cannot automatically access the Wi-Fi network provided by the first Wi-Fi device in a short time, and the terminal device switches from the second scanning manner to the first scanning manner to perform Wi-Fi scanning. This improves efficiency of scanning the Wi-Fi device by the terminal device, and reduces power consumption of the terminal device.

In a possible implementation of the first aspect, before that a terminal device performs Wi-Fi scanning in a first scanning manner, the method includes: When a matching relationship between a cell identity received by the terminal device and a cell identity in a stored first cell identity set meets a second matching condition, the terminal device performs Wi-Fi scanning in the first scanning manner.

In this embodiment of this application, the cell identity set indicates a plurality of cell identities collected when the terminal device accesses and is disconnected from the first Wi-Fi signal provided by the first Wi-Fi device.

In a possible implementation of the first aspect, that a terminal device performs Wi-Fi scanning in a first scanning manner includes: when a matching relationship between a cell identity received by the terminal device and a cell identity in a stored first cell identity set does not meet a second matching condition, the terminal device performs Wi-Fi scanning in a third scanning manner, where a scanning interval of the third scanning manner is greater than the scanning interval of the second scanning manner.

In this embodiment of this application, the third scanning manner indicates that Wi-Fi scanning is performed in a periodicity 003.

In a possible implementation of the first aspect, the first cell identity set is determined by using the following method: The terminal device accesses a first Wi-Fi signal provided by a first Wi-Fi device; obtains a plurality of first cell identities received by the terminal device; and determines the first cell identity set based on the plurality of first cell identities.

In a possible implementation of the first aspect, the first cell identity set is determined by using the following method: The terminal device accesses, at first time, a first Wi-Fi signal provided by a first Wi-Fi device; obtains a plurality of first cell identities received by the terminal device at the first time; and determines the first cell identity set based on the plurality of first cell identities.

In a possible implementation of the first aspect, the method further includes: The terminal device is disconnected, at second time, from the first Wi-Fi signal provided by the first Wi-Fi device; and uses, as the first cell identities, a plurality of cell identities received by the terminal device at the second time, to update the first cell identity set.

In this embodiment of this application, when the terminal device accesses or is disconnected from the Wi-Fi network provided by the first Wi-Fi device, the terminal device may collect both the Wi-Fi fingerprint and the cell identity of the terminal device, and store a correspondence between the cell identity, the Wi-Fi fingerprint, and the first Wi-Fi device currently accessed by the terminal device to generate a feature information table, so that the terminal device can further switch the scanning manner of the terminal device by detecting a change of the cell identity.

In a possible implementation of the first aspect, the method further includes: the scanning interval of the third scanning manner is greater than or equal to the scanning interval of the first scanning manner.

In this embodiment of this application, a scanning interval relationship between the scanning manners is the third scanning manner>the first scanning manner>the second scanning manner.

In a possible implementation of the first aspect, the method further includes: When a Wi-Fi channel used by the terminal device to perform Wi-Fi scanning in the second scanning manner is a second Wi-Fi channel, and a first quantity of scanning times of performing Wi-Fi scanning by the terminal device based on the second Wi-Fi channel exceeds a first threshold, in correspondence to a case in which the terminal device is in a mobile mode, the terminal device performs Wi-Fi scanning in the second scanning manner; or in correspondence to a case in which the terminal device is in a static mode, the terminal device performs Wi-Fi scanning in the third scanning manner.

In this embodiment of this application, the mobile mode indicates a mobile state, and the static mode indicates a static state.

In a possible implementation of the first aspect, the method further includes: When the matching relationship between the Wi-Fi device detected through scanning by the terminal device and the Wi-Fi device in the stored first Wi-Fi fingerprint does not meet the first matching condition, in correspondence to a case in which the terminal device is in a mobile mode, the terminal device performs Wi-Fi scanning in the second scanning manner; or in correspondence to a case in which the terminal device is in a static mode, the terminal device performs Wi-Fi scanning in the third scanning manner.

In a possible implementation of the first aspect, that the terminal device performs Wi-Fi scanning in a third scanning manner includes: The terminal device switches from the static mode to the mobile mode, and determines whether the matching relationship between the cell identity received by the terminal device and the cell identity in the stored first cell identity set meets the second matching condition.

In a possible implementation of the first aspect, the method further includes: The first Wi-Fi fingerprint and/or the first cell identity set are/is stored in a cloud server.

In this embodiment of this application, the user may upload the Wi-Fi fingerprint and the cell identity set to the cloud server, and share the Wi-Fi fingerprint and the cell identity set with another terminal device of the user through the cloud server, so that when using the another terminal device, the user may also switch the scanning manner by using the Wi-Fi fingerprint and the cell identity set.

According to a second aspect, an embodiment of this application provides a readable storage medium. The readable storage medium stores instructions; and when the instructions are executed on a terminal device, the terminal device is enabled to implement the wireless communication method according to any one of the first aspect and the possible implementations of the first aspect.

According to a third aspect, an embodiment of this application provides a terminal device. The terminal device includes: a memory, configured to store instructions executed by one or more processors of the terminal device; and a processor, where the processor is one of the processors of the terminal device, and is configured to execute the instructions stored in the memory, to implement the wireless communication method according to any one of the first aspect and the possible implementations of the first aspect.

According to a fourth aspect, an embodiment of this application provides a program product. The program product includes instructions; and when the instructions are executed by a terminal device, the terminal device is enabled to implement the wireless communication method according to any one of the first aspect and the possible implementations of the first aspect.

### BRIEF DESCRIPTION OF DRAWINGS

FIG. 1 is a diagram of an example of a wireless fidelity communication system according to some embodiments of this application;
FIG. 2 is a diagram of an example of a Wi-Fi channel and a Wi-Fi operating frequency band according to some embodiments of this application;
FIG. 3 is a schematic flowchart of determining scanning time according to some embodiments of this application;
FIG. 4 is a diagram of a Wi-Fi fingerprint collection scenario according to some embodiments of this application;
FIG. 5A is a schematic flowchart of a wireless communication method according to some embodiments of this application;
FIG. 5B is a diagram of a scenario of a wireless communication method according to some embodiments of this application;
FIG. 5C is a diagram of an example of a feature information table according to some embodiments of this application;
FIG. 5D is a schematic flowchart of generating a feature information table according to some embodiments of this application;
FIG. 6A-1 and FIG. 6A-2 are a schematic flowchart of another wireless communication method according to some embodiments of this application;

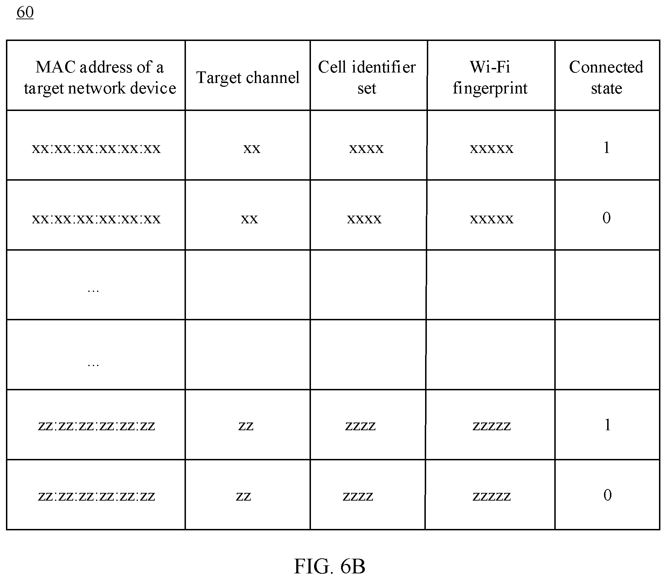

FIG. 6B is a diagram of an example of another feature information table according to some embodiments of this application;

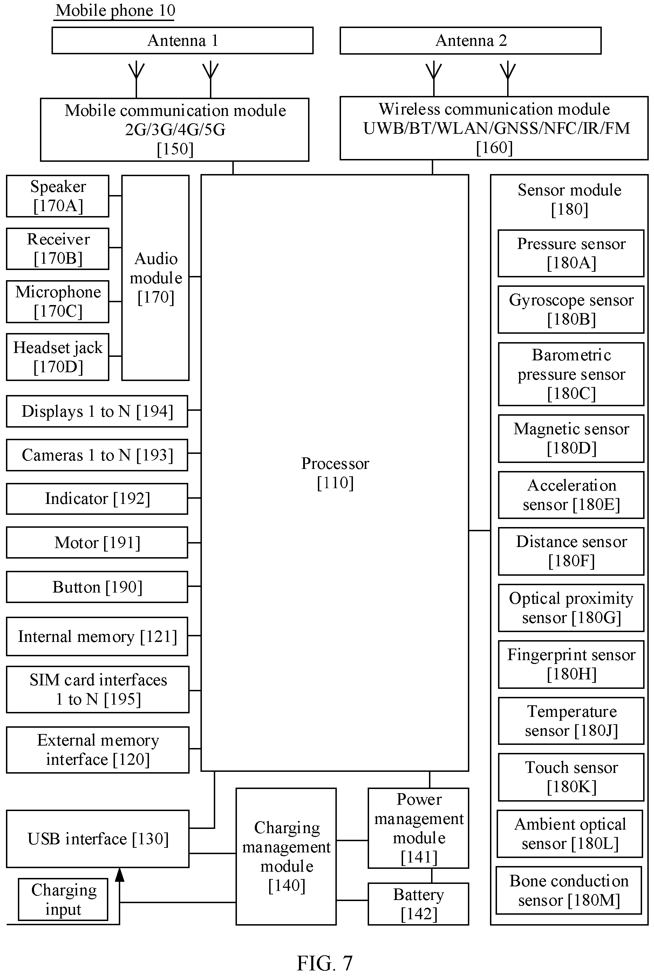

FIG. 7 is a diagram of a structure of a mobile phone 10 according to some embodiments of this application; and

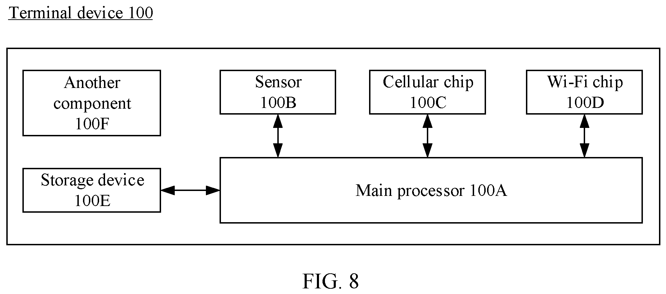

FIG. 8 is a diagram of a structure of a terminal device 100 according to some embodiments of this application.

### DESCRIPTION OF EMBODIMENTS

Illustrative embodiments of this application include but are not limited to a wireless communication method, a storage medium, and a terminal device.

To facilitate understanding of solutions in embodiments of this application by a person skilled in the art, the following first explains and describes related content that may be used in this application.

### (1) Wi-Fi access process

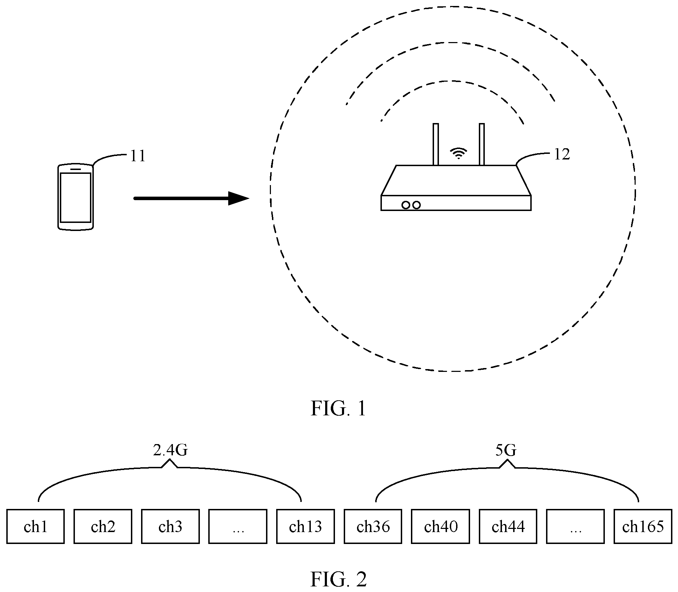

As shown in FIG. 1, a wireless fidelity communication system includes a terminal device 11 and a network device 12, and the terminal device 11 may be connected to a Wi-Fi network through the network device 12.

The terminal device 11 may be any electronic device that supports a wireless network connection, and includes but is not limited to a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a dedicated camera (for example, a single-lens reflex camera or a card camera), or the like. For example, as shown in FIG. 1, the terminal device 11 is a mobile phone.

The network device 12 may be a wireless switch in a wireless network, and includes but is not limited to a wireless router, a wireless network adapter, a modem, or the like. For example, as shown in FIG. 1, the network device 12 is a wireless router.

In some embodiments, a process in which the terminal device 11 accesses the Wi-Fi network provided by the network device 12 usually includes three phases: scanning (Scanning), authentication (Authentication), and association (Association). With reference to FIG. 1, the following mobile phone is used as an example of the terminal device 11, and the wireless router is used as an example of the network device 12, to explain and describe related processes of the three phases. Details are as follows:
First, the mobile phone may obtain, through Wi-Fi scanning, a Wi-Fi network provided by the wireless router near the mobile phone. In different Wi-Fi scanning manners of the mobile phone, Wi-Fi scanning may be further classified into active scanning and passive scanning.

Active scanning: During scanning, the mobile phone actively sends a probe request (Probe Request) frame on a Wi-Fi channel, and receives a probe response (Probe Response) frame sent by a wireless router near the mobile phone to discover a Wi-Fi network provided by a corresponding wireless router. The probe response frame includes but is not limited to wireless network information such as a service set identifier (Service Set Identifier, SSID), a basic service set identifier (Basic Service Set Identifier, BSSID), and an encryption and authentication manner.

Passive scanning: The mobile phone detects a Wi-Fi network provided by a wireless router near the mobile phone by listening to a beacon (Beacon) frame periodically sent by the wireless router. It may be understood that the wireless router periodically broadcasts the beacon frame on the Wi-Fi channel, and the beacon frame includes wireless network information such as an SSID, a BSSID, and an encryption and authentication manner.

Second, after obtaining, through Wi-Fi scanning, the Wi-Fi network provided by the wireless router near the mobile phone, the mobile phone initiates an authentication request to the corresponding wireless router based on the Wi-Fi network.

For example, the mobile phone obtains, through Wi-Fi scanning, the Wi-Fi network provided by the wireless router near the mobile phone, and displays the SSID of the Wi-Fi network detected through scanning on a display. If a user needs to join a specific wireless network, the user may tap the corresponding SSID on the display. In response to a tap operation of the user, the mobile phone pops up a password input window. After inputting information such as a password in the password input window, the user taps a connection button. In response to an operation performed by the user on the connection button, the mobile phone sends an authentication request frame to the wireless router based on the information such as the password input by the user.

For another example, if the mobile phone obtains, through Wi-Fi scanning, the Wi-Fi network provided by the wireless router near the mobile phone, and detects that the Wi-Fi network is a Wi-Fi network historically accessed by the mobile phone, the mobile phone may obtain password information of the historically accessed Wi-Fi network from a historical record, and automatically send the authentication request frame to the wireless router.

After receiving the authentication request of the mobile phone, the wireless router performs authentication based on information carried in the authentication request, to obtain an authentication result, and returns the authentication result to the mobile phone.

Finally, after receiving the authentication result returned by the wireless router, if the authentication result is that the authentication succeeds, the mobile phone sends an association request to the wireless router. The wireless router sends an association response to the mobile phone in response to the association request, to notify the mobile phone that the association succeeds. In this case, the mobile phone accesses the Wi-Fi network provided by the wireless router.

### (2) Wi-Fi channel and Wi-Fi operating frequency band

In some embodiments, the Wi-Fi operating frequency band may be 2.4 GHz and 5 GHz, or may be 6 GHz in 6th generation Wi-Fi (Wi-Fi 6). This is not specifically limited.

In some embodiments, a Wi-Fi device may simultaneously operate on two frequency bands: 2.4 GHz and 5 GHz. For example, if a Wi-Fi module of the Wi-Fi device supports dual band dual concurrent (Dual Band Dual Concurrent, DBDC), the Wi-Fi device may simultaneously operate on two frequency bands. The Wi-Fi device supporting DBDC integrates two sets of complete channels, including two complete baseband processors and two radio frequency front-ends. The Wi-Fi device indicates a wireless router or a mobile phone.

For example, a wireless router that supports DBDC may simultaneously send network signals of 2.4 GHz and 5 GHz, that is, provide two Wi-Fi networks, where one Wi-Fi network is of a 2.4 GHz frequency band, and the other Wi-Fi network is of a 5 GHz frequency band.

For another example, a mobile phone that supports DBDC may be connected to both a Wi-Fi network of a 2.4G frequency band and a Wi-Fi network of a 5G frequency band. The two Wi-Fi networks may be provided by a same network device, or may be provided by two network devices. For example, the mobile phone that supports DBDC may be connected to both a Wi-Fi network of a 2.4G frequency band and a Wi-Fi network of a 5G frequency band of a wireless router A, or may be separately connected to a Wi-Fi network of a 2.4G frequency band of a wireless router A and a Wi-Fi network of a 5G frequency band of a wireless router B.

In some other embodiments, the Wi-Fi device can operate only on one frequency band in a same time period, that is, can operate only on a 2.4G frequency band or a 5G frequency band in a same time period. For example, the wireless router A supporting DBDC operates on both a 2.4G frequency band and a 5G frequency band, and provides a Wi-Fi network of a 2.4G frequency band and a Wi-Fi network of a 5G frequency band. However, a Wi-Fi module of the mobile phone can operate only on one frequency band. Therefore, the mobile phone can be connected to only the Wi-Fi network of the 2.4G frequency band or the Wi-Fi network of the 5G frequency band, but cannot be simultaneously connected to the Wi-Fi networks of the 2.4G and 5G frequency bands.

The following uses 2.4 GHz and 5 GHz operating frequency bands as examples to describe Wi-Fi channels.

Each operating frequency band has available Wi-Fi channels. China is used as an example. As shown in FIG. 2, there are 13 Wi-Fi channels that are available on the 2.4 GHz frequency band: a channel 1 to a channel 13. Wi-Fi channels that are available on the 5 GHz frequency band include a channel 36, a channel 40, a channel 44, a channel 48, a channel 52, a channel 56, a channel 60, a channel 64, a channel 149, a channel 153, a channel 157, a channel 161, and a channel 165.

In some embodiments, the Wi-Fi device that supports DBDC may broadcast or listen to a beacon frame on a plurality of Wi-Fi channels that are available on two frequency bands: 2.4G and 5G. For example, the wireless router A that supports DBDC may broadcast the beacon frame on the plurality of Wi-Fi channels that are available on the two frequency bands: 2.4G and 5G. Correspondingly, the mobile phone that supports DBDC may switch between the plurality of Wi-Fi channels that are available on the two frequency bands: 2.4G and 5G, to listen to the beacon frame. Alternatively, for example, the mobile phone that supports DBDC may send a probe request frame on the plurality of Wi-Fi channels that are available on the two frequency bands: 2.4G and 5G.

It may be understood that the mobile phone may obtain, in a Wi-Fi scanning manner, the Wi-Fi network provided by the wireless router. In some other embodiments, the terminal device such as the mobile phone that supports a Wi-Fi network sharing function may enable the Wi-Fi network sharing function, so that another terminal device such as the mobile phone obtains the shared Wi-Fi network in the Wi-Fi scanning manner. That is, the terminal device such as the mobile phone that supports the Wi-Fi network sharing function may also be used as the foregoing network device to provide the Wi-Fi network.

In some embodiments, scanning time for the mobile phone to perform Wi-Fi scanning may be determined by using an operating mode of the mobile phone.

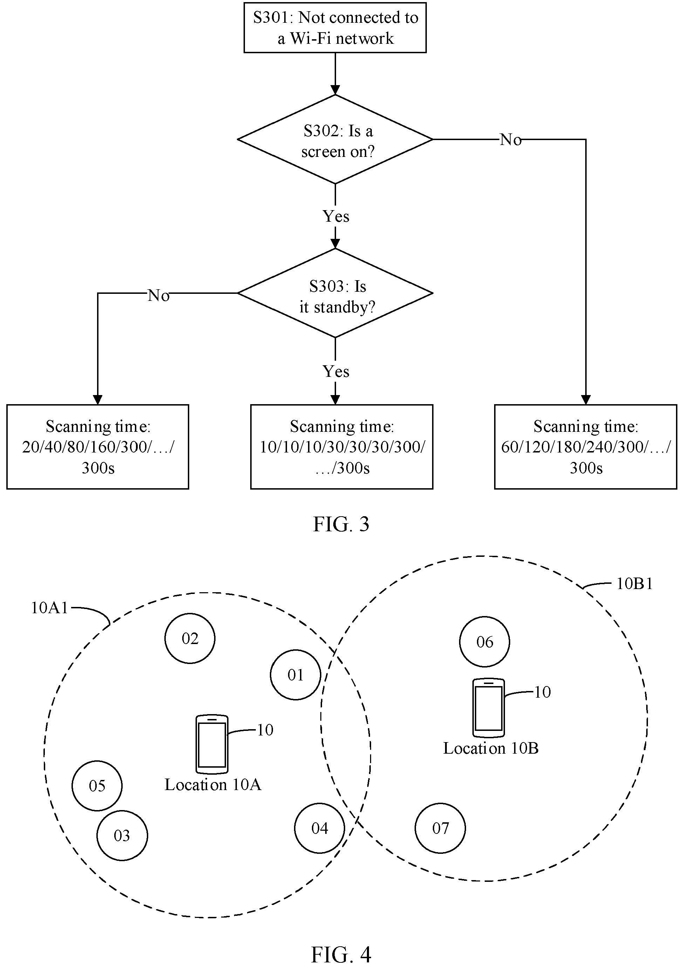

For example, FIG. 3 is a schematic flowchart of determining scanning time. The following steps are specifically included.

S301: A mobile phone is not connected to a Wi-Fi network.

In some embodiments, when it is detected that the mobile phone is not connected to the Wi-Fi network, the mobile phone may scan a wireless router near the mobile phone in a Wi-Fi scanning manner to access the Wi-Fi network. Further, scanning time of Wi-Fi scanning may be determined by detecting a screen-on mode of the mobile phone.

S302: Detect whether a screen of the mobile phone is on.

In some embodiments, when it is detected that the mobile phone is not in the screen-on mode, it may indicate that the mobile phone is not used by a user, the mobile phone is in a standby state, and the user has a low requirement for the Wi-Fi network. The mobile phone may perform scanning using long scanning time. For example, time of a 1^{st} time of scanning is 60 seconds, time of a 2^{nd} time of scanning is 120 seconds, time of a 3^{rd} time of scanning is 180 seconds, and time of a 4^{th} time of scanning is 240 seconds. Subsequently, to reduce power consumption of the mobile phone, the mobile phone usually prolongs the scanning time of Wi-Fi scanning. For example, scanning time is always 300 seconds after a 5^{th} time of scanning.

It may be understood that the mobile phone may usually determine, through first several times of Wi-Fi scanning, whether there is a Wi-Fi network, near the mobile phone, that can be connected. If the mobile phone is not connected to the Wi-Fi network in the first several times of Wi-Fi scanning, it is determined that there is no available Wi-Fi network near the mobile phone currently, thereby prolonging the scanning time of Wi-Fi scanning, to reduce power consumption. Therefore, time of the first several times of scanning may be adjusted in different use scenarios.

In some other embodiments, when it is detected that the mobile phone is in the screen-on mode, the scanning time may be further determined by using a standby mode of the mobile phone, and step S303 is performed.

S303: Detect whether the mobile phone is standby.

In some embodiments, when it is detected that the mobile phone is in the screen-on mode but is not in the standby mode, it may indicate that the user is using the mobile phone, and the user has a requirement for the Wi-Fi network. For example, the user uses a terminal device such as the mobile phone while walking. In this case, the mobile phone may adjust the scanning time. For example, time of a 1^{st} time of scanning is 20 seconds, time of a 2^{nd} time of scanning is 40 seconds, time of a 3^{rd} time of scanning is 80 seconds, and a 4^{th} time of scanning is 160 seconds. If the mobile phone is not connected to the Wi-Fi network in the first several times of Wi-Fi scanning, the scanning time of Wi-Fi scanning is prolonged subsequently. For example, scanning time of a 5^{th} time of scanning and scanning time of scanning after the 5^{th} time of scanning are always 300 seconds.

In some other embodiments, when it is detected that the mobile phone is in the screen-on mode and is in the standby mode, it may indicate that the user is using the mobile phone, and the user has a high requirement for the Wi-Fi network. For example, when the user places the mobile phone on a desktop and performs operations such as music playing, movie watching, and movie projection through the mobile phone, the mobile phone is in the standby mode, and the mobile phone needs to be connected to the Wi-Fi network to perform the operations such as music playing, movie watching, and movie projection, that is, the user has a high requirement for the Wi-Fi network. In this case, the mobile phone may perform scanning by using short scanning time. For example, time of first three times of scanning is 10 seconds, and time of a 4^{th} time of scanning to time of a 6^{th} time of scanning are 30 seconds. If the mobile phone is not connected to the Wi-Fi network in the first several times of Wi-Fi scanning, the scanning time of Wi-Fi scanning is prolonged subsequently. For example, scanning time of a 7^{th} time of scanning and scanning time of scanning after the 7^{th} time of scanning are always 300 seconds.

In some embodiments, if an operating mode of the mobile phone keeps changing, but there is no Wi-Fi network that can be accessed by the mobile phone near the mobile phone, for example, there is no wireless router near the mobile phone, or the user cannot obtain password information that is used by a wireless router near the mobile phone for authentication, but because the operating mode of the mobile phone keeps changing, the mobile phone keeps adjusting the scanning time based on a detection result. In addition, because there is no Wi-Fi network that can be accessed by the mobile phone near the mobile phone, and time of the first several times of scanning after each time of adjustment is short, scanning power consumption of the mobile phone increases.

In some embodiments, if an operating mode of the mobile phone is relatively fixed, and there is a Wi-Fi network that can be accessed by the mobile phone near the mobile phone, for example, there is a wireless router that is historically accessed near the mobile phone, or the user can obtain password information that is used by a wireless router near the mobile phone for authentication, due to factors such as an unstable signal of the wireless router or external blocking, the mobile phone cannot detect the wireless router through scanning in the first several times of scanning, and then the mobile phone prolongs the scanning time of Wi-Fi scanning. In addition, because there is a Wi-Fi network that can be accessed by the mobile phone near the mobile phone, the mobile phone cannot quickly detect the wireless router through scanning to be connected to the Wi-Fi network. This reduces efficiency of connecting the mobile phone to the Wi-Fi network.

In some embodiments, to ensure that the mobile phone can detect all wireless routers, near the mobile phone, through scanning in the foregoing Wi-Fi scanning process, the mobile phone usually uses a full-channel scanning manner, that is, switches between 13 Wi-Fi channels of a 2.4G frequency band or a plurality of Wi-Fi channels of a 5G frequency band to perform Wi-Fi scanning. It can be learned that when the full-channel scanning manner is used, scanning power consumption of the mobile phone is high.

To resolve the foregoing problem, in a process of using the terminal device, when the terminal device detects through scanning and accesses a Wi-Fi network provided by a specific network device, the terminal device records all network devices currently detected through scanning by the terminal device. In all network devices, a network device currently accessed by the terminal device is used as a target network device, a network device that is not currently accessed by the terminal device is used as an associated network device, a Wi-Fi fingerprint is generated based on the target network device and the associated network device, and the target network device is identified by using the Wi-Fi fingerprint. In addition, a Wi-Fi channel connected between the terminal device and the target network device is recorded, and the Wi-Fi channel is used as a target channel of the target network device.

In this way, in a subsequent process in which the terminal device is disconnected from the Wi-Fi network and needs to re-scan and be connected to the network, when a real-time network device detected through scanning by the terminal device includes any one or more associated network devices in the Wi-Fi fingerprint, it may be determined that the terminal device is currently close to the target network device, and the terminal device may shorten the scanning time, thereby increasing a Wi-Fi scanning frequency, and improving efficiency of detecting the target network device through scanning by the terminal device to re-access the Wi-Fi network. In addition, when determining that the terminal device is currently close to the target network device, the terminal device may obtain, from the historical record, the target channel corresponding to the target network device, and switch from the full-channel scanning manner to a separate target channel for scanning, so that the terminal device does not need to switch between the plurality of Wi-Fi channels in full-channel scanning. This reduces scanning power consumption of the terminal device.

In some embodiments, the target network device is a network device historically accessed by the terminal device, and the plurality of associated network devices are a plurality of network devices that are detected through scanning by the terminal device when the terminal device historically accesses the target network device. The plurality of network devices detected through scanning by the terminal device when the terminal device historically accesses the target network device may include a network device that has not been accessed by the terminal device, or may include a network device that is historically accessed by the terminal device. That is, the associated network device may be the network device that has not been accessed by the terminal device, or may be the network device that is historically accessed by the terminal device.

For example, in a process in which the terminal device does not access the Wi-Fi network to perform Wi-Fi scanning, two network devices that are historically accessed by the terminal device, for example, a target network device 13 and a target network device 14, are simultaneously detected through scanning. Because a Wi-Fi network signal of the target network device 13 is strong, the terminal device may preferentially access a Wi-Fi network provided by the target network device 13. In this case, the target network device 14 may be used as an associated network device of the target network device 13.

The following uses an example in which a mobile phone 10 is used as the terminal device, and explains and describes a Wi-Fi fingerprint generation process with reference to a scenario in which the mobile phone 10 is network-connected to a network device.

In some embodiments, as shown in FIG. 4, when the mobile phone 10 is located at a location 10A, a Wi-Fi scanning area of the mobile phone 10 is an area 10A1; or when the mobile phone 10 is located at a location 10B, a Wi-Fi scanning area of the mobile phone 10 is an area 10B1; and a network device 01 is a target network device of the mobile phone 10.

It may be understood that the network device 01 is a network device that is historically accessed by the mobile phone 10, that is, the mobile phone 10 stores password information used for authentication of the network device 01. In this case, when the mobile phone 10 detects the network device 01 through scanning, the mobile phone 10 may obtain the password information from a historical record to initiate authentication to the network device 01, so that the mobile phone 10 can be automatically reconnected to a Wi-Fi network provided by the network device 01. Alternatively, the network device 01 may be a network device that is not historically accessed by the mobile phone 10, but is a network device that the user wants to be connected to, that is, the user knows the password information used for authentication of the network device 01. In this case, when the mobile phone 10 detects the network device 01 through scanning, the user may input the password information to initiate authentication to the network device 01 through a network connection prompt pop-up window displayed by the mobile phone 10, so that the mobile phone 10 can be connected to the Wi-Fi network provided by the network device 01.

As shown in FIG. 4, when the user carrying the mobile phone 10 is located at the location 10A, the mobile phone 10 may detect, through scanning, network devices 01, 02, 03, 04, and 05 through full-channel scanning. The mobile phone 10 may automatically initiate a request to the network device 01 to perform network connection; or the user may select, through the network connection prompt pop-up window displayed by the mobile phone 10, an SSID corresponding to the network device 01, and input the password information, to initiate the request to the network device 01 to perform network connection.

After the mobile phone 10 accesses the Wi-Fi network provided by the network device 01, network device information A obtained by the mobile phone 10 at the location 10A by collecting full-channel scanning is recorded. In this case, the network device information A includes the network devices 01, 02, 03, 04, and 05, the network device 01 accessed by the mobile phone 10 is used as the target network device, and the network devices 02 to 05 that are not accessed by the mobile phone 10 are used as associated network devices.

Further, when the user carrying the mobile phone 10 moves to the location 10B, the network device 01 is located outside the Wi-Fi scanning area 10B1 of the mobile phone 10, that is, the mobile phone 10 is disconnected from the network device 01. In addition, after the mobile phone 10 is disconnected from the Wi-Fi network provided by the network device 01, network device information B obtained by the mobile phone 10 at the location 10B by collecting full-channel scanning is recorded. In this case, the network device information B includes network devices 06 and 07, the network device 01 disconnected after the mobile phone 10 accesses is used as the target network device, and the network devices 06 and 07 that are not accessed by the mobile phone 10 are used as associated network devices.

In some embodiments, it may be understood that the location 10A is used as a living room of a house of the user, the location 10B is used as a bedroom bathroom of the house of the user, and the network device 01 is used as a wireless router placed by the user in the living room. In this case, when the user carrying the mobile phone 10 is in the living room, because a distance is short, the user may scan and access the Wi-Fi network provided by the network device 01. In addition, when the mobile phone 10 scans and accesses the network device 01, the mobile phone 10 further scans neighboring network devices, such as the network devices 02, 03, 04, and 05. After the user carrying the mobile phone 10 moves to the bedroom bathroom, because the bedroom bathroom is far away from the network device 01, the network device 01 cannot be detected through scanning. That is, the mobile phone 10 is disconnected from the Wi-Fi network provided by the network device 01, so that the user cannot access, in the bedroom bathroom, the Wi-Fi network provided by the network device 01. However, in this case, the mobile phone 10 can detect other neighboring network devices such as network devices 06 and 07 through scanning at the location 10B.

In some embodiments, on a basis that the network device information A and the network device information B include a same target network device, the network device information A and the network device information B may be combined, to generate a Wi-Fi fingerprint corresponding to the same target network device included in the network device information A and the network device information B, to be specific, generate a Wi-Fi fingerprint corresponding to the network device 01 by recording a full-channel scanning result obtained when the mobile phone 10 accesses the network device 01 and a full-channel scanning result obtained when the mobile phone 10 is disconnected from the network device 01. As shown in FIG. 4, the Wi-Fi fingerprint corresponding to the network device 01 include the network devices 01 to 07. The network device 01 is used as the target network device, and the network devices 02 to 07 are used as the associated network devices.

In some embodiments, the Wi-Fi fingerprint of the network device 01 may be updated by recording a full-channel scanning result each time the mobile phone 10 accesses and is disconnected from the network device 01. It may be understood that, as shown in FIG. 4, after the mobile phone 10 generates, based on the network devices 01 to 07, the Wi-Fi fingerprint corresponding to the network device 01, the mobile phone 10 may further detect other network devices, for example, network devices 08 and 09, through scanning when subsequently re-accessing and being disconnected from the network device 01. In this case, when the mobile phone 10 subsequently re-accesses and is disconnected from the network device 01, the network devices 08 and 09 may be used as associated network devices and updated to the Wi-Fi fingerprint of the corresponding network device 01, so that the Wi-Fi fingerprint of the network device 01 includes the network devices 01 to 09. Therefore, the Wi-Fi fingerprint of the network device 01 is more complete, and identification of the network device 01 by using the Wi-Fi fingerprints is improved.

In some other embodiments, after the mobile phone 10 accesses the network device 01, the mobile phone 10 may further update the Wi-Fi fingerprint by periodically collecting a full-channel scanning result obtained when the mobile phone 10 accesses the network device 01. For example, after the mobile phone 10 accesses the network device 01, the mobile phone 10 performs one time of full-channel scanning at an interval of half an hour or 15 minutes, and updates the Wi-Fi fingerprint of the network device 01 based on a scanning result.

In some embodiments, the mobile phone 10 may use a plurality of historically accessed network devices as different target network devices of the mobile phone 10; or the mobile phone 10 may use, as a target network device of the mobile phone 10, one or more network devices that are in the plurality of historically accessed network devices and that exceed a preset quantity of access times, so that the target network device may indicate a network device frequently connected to the user; or the user may customarily select, as a target network device of the mobile phone 10, any one or more network devices from the plurality of historically accessed network devices, so that the target network device meets a personalized requirement of the user. This is not specifically limited.

In some embodiments, the user may upload the Wi-Fi fingerprint to the cloud server, and the user may share the Wi-Fi fingerprint with another terminal device of the user through the cloud server, so that the user may also use the Wi-Fi fingerprint when using a terminal device other than the mobile phone 10; or different users may upload obtained Wi-Fi fingerprints to the cloud server, and the cloud server may classify the Wi-Fi fingerprints based on medium access control (Medium Access Control, MAC) addresses of network devices in the Wi-Fi fingerprints, and integrate the Wi-Fi fingerprints for the network device 01, so that the Wi-Fi fingerprint of the network device 01 is more complete, and identification of the network device 01 based on the Wi-Fi fingerprint is improved.

In some embodiments, filtering and screening may be performed on the plurality of associated network devices in the Wi-Fi fingerprint. For example, if geographical locations of the plurality of associated network devices are similar, for example, signal strength (Received Signal Strength Indication, RSSI) of probe response frames, of the plurality of associated network devices, received by the mobile phone 10 at a same location is the same or similar, any one associated network device or a preset quantity of associated network devices is/are reserved in the plurality of associated network devices, to improve unity of the associated network devices in the Wi-Fi fingerprint, and reduce an amount of data of the Wi-Fi fingerprint when accuracy of identifying the target network device by using the Wi-Fi fingerprint is ensured, so that efficiency of downloading the Wi-Fi fingerprint from the cloud server by the user can be improved.

The following explains and describes some embodiments of this application with reference to a scenario of the Wi-Fi fingerprint generation process shown in FIG. 4.

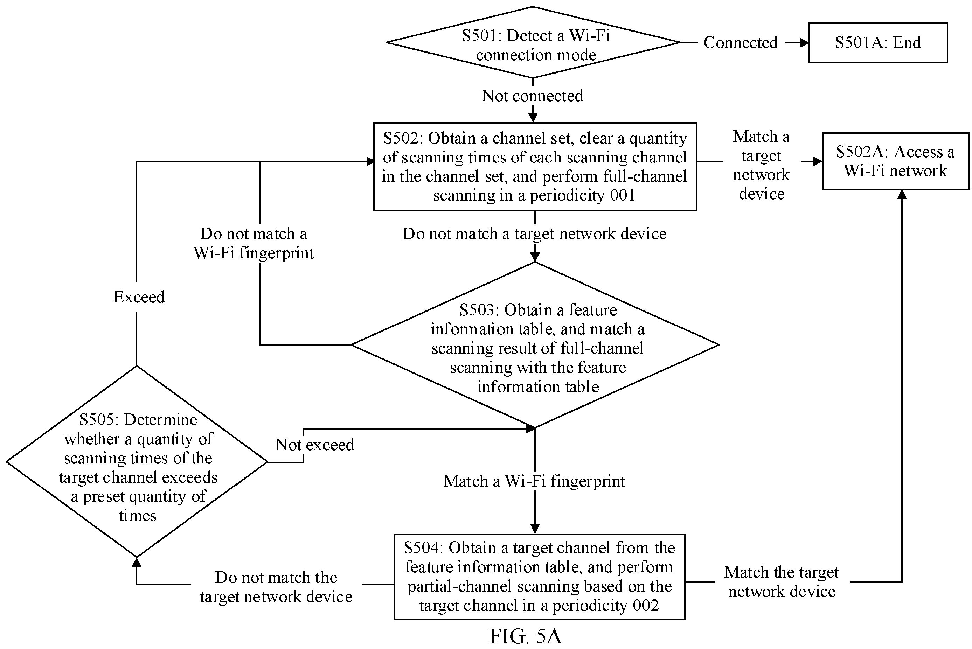

FIG. 5A is a flowchart of steps of a wireless communication method according to some embodiments of this application. The wireless communication method is applied to a mobile phone 10, and specifically includes the following steps.

S501: Detect a Wi-Fi connection mode of the mobile phone 10.

In some embodiments, whether the mobile phone 10 needs to initiate Wi-Fi scanning may be determined by detecting the Wi-Fi connection mode of the mobile phone 10.

For example, when it is detected that the Wi-Fi connection mode of the mobile phone 10 is connected, it indicates that the mobile phone 10 has accessed a Wi-Fi network, and does not need to initiate Wi-Fi scanning, step S501A is performed, and the procedure ends; or for example, when it is detected that the Wi-Fi connection mode of the mobile phone 10 is not connected, it indicates that the mobile phone 10 has not accessed a Wi-Fi network, and needs to initiate Wi-Fi scanning, and step S502 is performed.

S502: Obtain a channel set of the mobile phone 10; and after a quantity of scanning times of each scanning channel in the channel set is cleared, control the mobile phone 10 to perform full-channel scanning in a periodicity 001.

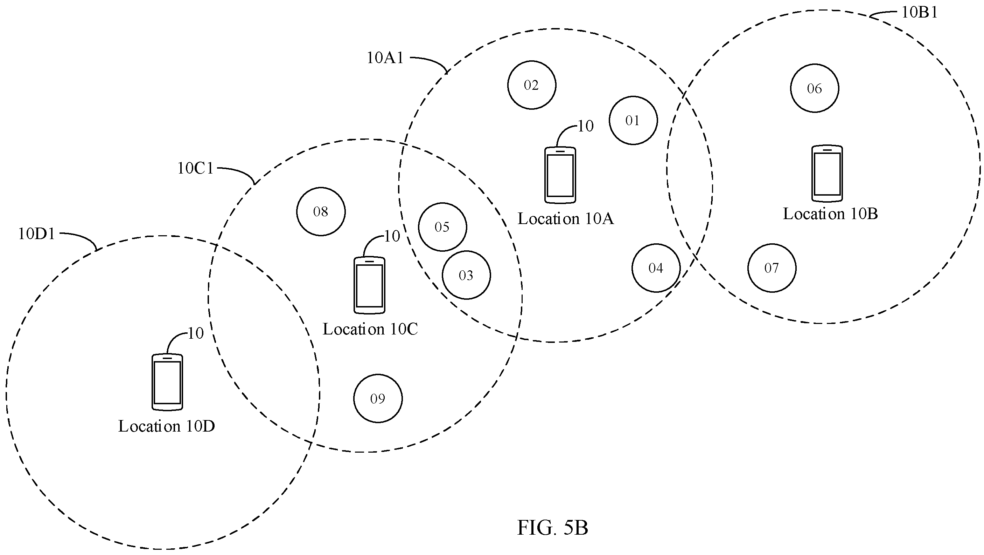

In some embodiments, with reference to FIG. 4, as shown in FIG. 5B, when the mobile phone 10 is located at a location 10A, a Wi-Fi scanning area of the mobile phone 10 is an area 10A1; when the mobile phone 10 is located at a location 10B, a Wi-Fi scanning area of the mobile phone 10 is an area 10B1; when the mobile phone 10 is located at a location 10C, a Wi-Fi scanning area of the mobile phone 10 is an area 10C1; or when the mobile phone 10 is located at a location 10D, a Wi-Fi scanning area of the mobile phone 10 is an area 10D1. A network device 01 is a target network device of the mobile phone 10.

The network device 01 is a network device historically accessed by the mobile phone 10, and the mobile phone 10 stores authentication password information used for a connection to the network device 01. When the mobile phone 10 detects the network device 01 through scanning, the mobile phone 10 may automatically obtain password information of the network device 01 to initiate authentication to the network device 01, a user does not need to input a password, and the mobile phone 10 may automatically access a Wi-Fi network provided by the network device 01. Network devices 02 to 09 are network devices that are not historically accessed by the mobile phone 10, the mobile phone 10 does not store the authentication password information, and cannot automatically access Wi-Fi networks provided by the network device 02 to the network device 09, and an authentication connection can be initiated to a corresponding network device only after the user manually inputs corresponding password information.

The following uses an example in which the user cannot obtain password information of the network devices 02 to 09, and the mobile phone 10 is automatically connected to the Wi-Fi network after detecting the network device 01 through scanning for explanation and description.

In some embodiments, as shown in FIG. 5B, when the user carrying the mobile phone 10 is located at the location 10D, there is no network device that can be scanned near the mobile phone 10, that is, the Wi-Fi connection mode of the mobile phone 10 is not connected.

Further, after determining that the Wi-Fi connection mode of the mobile phone 10 is not connected, the channel set of the mobile phone 10 is obtained. The channel set includes a plurality of scanning channels. The plurality of scanning channels may be any combination of available Wi-Fi channels on the foregoing 2.4 GHz and 5 GHz operating frequency bands, or the plurality of scanning channels may be all Wi-Fi channels supported by the mobile phone 10 for performing Wi-Fi scanning. This is not specifically limited. After the mobile phone 10 is controlled to clear the quantity of scanning times of each scanning channel in the channel set, the mobile phone 10 is controlled to perform full-channel scanning based on the channel set in the periodicity 001.

In the periodicity 001, an interval of scanning time of each time of Wi-Fi scanning is long. For example, one time of Wi-Fi scanning is performed at an interval of 60 seconds each time. Because there is no network device that can be scanned when the mobile phone 10 currently performs scanning at the location 10D in the area 10D1, that is, the mobile phone 10 cannot be connected to the Wi-Fi network, the periodicity 001 with long interval scanning time is used to perform Wi-Fi scanning, so that power consumption of the mobile phone 10 can be reduced. In addition, because the mobile phone 10 is not connected to the Wi-Fi network in this case, the full-channel scanning manner in the periodicity 001 is used, so that efficiency of detecting the network device through scanning by the mobile phone 10 can be improved.

In some embodiments, in step S502, when the mobile phone 10 detects the network device through full-channel scanning, and the network device is a network device that is historically accessed by the mobile phone 10, for example, when the network device 01 is detected through scanning, it indicates that the mobile phone 10 matches the target network device, and the mobile phone 10 may automatically access the Wi-Fi network provided by the network device 01, that is, step S502A is performed.

In some other embodiments, in step S502, when the mobile phone 10 detects the network device through full-channel scanning, and the network device is a network device that is not historically accessed by the mobile phone 10, for example, when the network device 01 is not detected through scanning, it indicates that the mobile phone 10 does not match the target network device, and step S503 is performed.

S503: Obtain a feature information table of the mobile phone 10, and match a scanning result of full-channel scanning with the feature information table.

In some embodiments, as shown in FIG. 5B, when the user carrying the mobile phone 10 moves to the location 10C, the mobile phone 10 obtains network devices such as the network devices 03, 05, 08, and 09 through full-channel scanning, uses each network device detected through scanning as a scanning result of full-channel scanning, and matches the scanning result with the feature information table.

In some embodiments, Wi-Fi fingerprints corresponding to different target network devices may be determined by collecting a full-channel scanning result obtained when the mobile phone 10 historically accesses and is disconnected from the target network device. For a specific determining process, refer to FIG. 4. For example, the Wi-Fi fingerprint corresponding to the network device 01 includes at least one target network device being the network device 01 and a plurality of associated network devices being the network devices 02 to 07. Details are not described herein.

Further, the feature information table corresponding to the target network device is generated based on the Wi-Fi fingerprint and with reference to the Wi-Fi channel of the target network device accessed by the mobile phone 10.

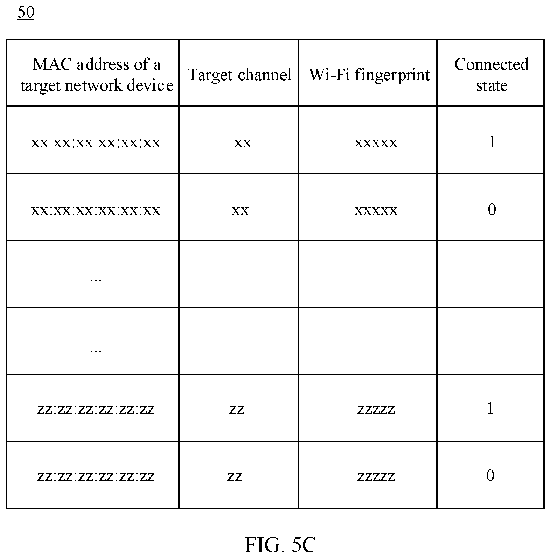

For example, as shown in FIG. 5C, the feature information table 50 includes a MAC address of the target network device, a target channel, a Wi-Fi fingerprint, and a connected state. When the target network device corresponding to the mobile phone 10 is the network device 01, the MAC address of the target network device indicates a MAC address of the network device 01; the target channel indicates the Wi-Fi channel of the network device 01 accessed by the mobile phone 10; the Wi-Fi fingerprint indicates MAC addresses of a plurality of network devices, for example, MAC addresses of the network devices 01 to 07, collected when the mobile phone 10 accesses and is disconnected from the network device 01, and the MAC address of the network device 01 currently accessed by the mobile phone 10 is used as the MAC address of the target network device; and the connected state indicates that the mobile phone 10 accesses or is disconnected from the network device 01, where for example, 1 indicates that the mobile phone 10 accesses the network device 01, and 0 indicates that the mobile phone 10 is disconnected from the network device 01.

Further, after obtaining the scanning result of the network devices 03, 05, 08, and 09, the mobile phone 10 matches the scanning result with the feature information table.

In some embodiments, when the MAC addresses of the plurality of network devices in the scanning result are different from the MAC addresses of the plurality of associated network devices in the Wi-Fi fingerprint, it is determined that the scanning result does not match the Wi-Fi fingerprint, and step S502 is performed. It may be understood that, when the scanning result does not match the Wi-Fi fingerprint, it indicates that there is no target network device that is historically accessed by the mobile phone 10 near the current location of the mobile phone 10, and the mobile phone 10 cannot automatically access the Wi-Fi network. Therefore, the periodicity 001 with long interval scanning time is used to perform Wi-Fi scanning, so that scanning power consumption of the mobile phone 10 can be reduced.

In some other embodiments, when the MAC addresses of the plurality of network devices in the scanning result are partially the same as the MAC addresses of the plurality of associated network devices in the Wi-Fi fingerprint, it is determined that the scanning result does not match the Wi-Fi fingerprint, and step S504 is performed.

S504: Obtain the target channel from the feature information table, and control the mobile phone 10 to perform partial-channel scanning based on the target channel in a periodicity 002.

In some embodiments, because the Wi-Fi fingerprint is a fingerprint collected when the mobile phone 10 historically accesses the target network device, the Wi-Fi fingerprint may identify a location at which the mobile phone 10 historically accesses the target network device. When the MAC addresses of the plurality of network devices in the scanning result are partially the same as the MAC addresses of the plurality of associated network devices in the Wi-Fi fingerprint, for example, a MAC address of any one or more network devices in the scanning result may be queried in the Wi-Fi fingerprint, it indicates that the mobile phone 10 is close to the location at which the mobile phone 10 historically accesses the target network device, and the user carrying the mobile phone 10 may move in a direction close to the target network device.

Further, the mobile phone 10 obtains, from the feature information table, the target channel of the target network device corresponding to the corresponding matched Wi-Fi fingerprint, and controls the mobile phone 10 to switch from full-channel scanning to a single-channel scanning manner based on the target channel, to reduce scanning power consumption and ensure scanning and searching of the target network device. In addition, after the mobile phone 10 switches to single-channel scanning, the interval scanning time may be shortened. In comparison with the periodicity 001, scanning is performed in the periodicity 002 with short interval scanning time, for example, one time of Wi-Fi scanning is performed at an interval of 20 seconds, so that a speed of reconnecting the mobile phone 10 to the Wi-Fi network provided by the target network device is improved, and user experience is improved.

In some embodiments, if the mobile phone 10 matches the Wi-Fi fingerprint of the plurality of target network devices, partial-channel scanning may be performed based on a plurality of target channels corresponding to the plurality of target network devices. It may be understood that, after it is determined that the scanning result matches the Wi-Fi fingerprint, the target network device is determined by using the matched Wi-Fi fingerprint. For example, specific network devices queried from the Wi-Fi fingerprint are network devices that are historically accessed by the mobile phone 10, the historically accessed network device is used as the target network device, and the target channel recorded during historical access of the target network device is used to switch from full-channel scanning to single-channel scanning or partial-channel scanning by the target channel.

The following uses an example in which the scanning result of full-channel scanning of the mobile phone 10 matches the Wi-Fi fingerprint of the network device 01, and the mobile phone 10 switches from full-channel scanning to a single-channel scanning manner of the target channel of the network device 01 historically accessed by the mobile phone 10 for explanation and description.

For example, as shown in FIG. 5B, the user carrying the mobile phone 10 is at the location 10C, so that after the full-channel scanning result of the mobile phone 10 matches the Wi-Fi fingerprint, the mobile phone 10 obtains the target channel of the target network device corresponding to the Wi-Fi fingerprint, for example, the target channel of the network device 01, performs single-channel scanning based on the target channel, shortens interval scanning time compared with the periodicity 001, and performs Wi-Fi scanning in the periodicity 002 with short interval scanning time.

In some embodiments, after the user carrying the mobile phone 10 moves from the location 10C to the location 10A, the mobile phone 10 detects the network device 01 through scanning, and the mobile phone 10 may automatically access the Wi-Fi network provided by the network device 01. In this case, step S502A is performed.

In some other embodiments, if the user carrying the mobile phone 10 moves from the location 10C to a direction away from the location 10A, for example, moves from the location 10C to the location 10D, the mobile phone 10 cannot detect the network device 01 through scanning, and the mobile phone 10 cannot automatically access the Wi-Fi network provided by the network device 01. In this case, step S505 is performed.

S505: Record a quantity of scanning times of the target channel, and determine whether the quantity of scanning times of the target channel exceeds a preset quantity of times.

In some embodiments, a scanning periodicity and the scanning channel of the mobile phone 10 may be switched by using the quantity of scanning times of the target channel.

For example, when the mobile phone 10 does not detect the network device 01 through scanning, and the quantity of scanning times of the target channel does not exceed the preset quantity of times, it may indicate the user carrying the mobile phone 10 may move in a direction close to the network device 01, step S504 is performed, and the mobile phone 10 continues to perform Wi-Fi scanning through the target channel in the periodicity 002.

For another example, when the mobile phone 10 does not detect the network device 01 through scanning, and the quantity of scanning times of the target channel exceeds the preset quantity of times, it indicates that the user carrying the mobile phone 10 may move in a direction away from a signal of the network device 01, so that the mobile phone 10 cannot automatically access the Wi-Fi network provided by the network device 01 in short time. In this case, step S502 is performed. The mobile phone 10 switches from single-channel scanning to full-channel scanning, to improve efficiency of detecting the network device through scanning by the mobile phone 10. In addition, the mobile phone 10 switches from the periodicity 002 with short interval scanning time to the periodicity 001 with long interval scanning time, to reduce scanning power consumption of the mobile phone 10.

In some embodiments, as shown in FIG. 5B, it may be understood that the location 10A is used as a living room of a house of the user, the location 10C is used as a corridor of the house of the user, the location 10D is used as a cell of the house of the user, and the network device 01 is used as a wireless router placed by the user in the living room.

When the user carrying the mobile phone 10 enters the cell, because the mobile phone 10 is far away from the living room, the mobile phone 10 cannot detect the network device 01 through scanning, and the mobile phone 10 performs full-channel Wi-Fi scanning in the periodicity 001 with long interval scanning time, to ensure that the network device can be detected through scanning. When the user carrying the mobile phone 10 approaches to the living room and enters a corridor of a residential building, the mobile phone 10 detects the network device through scanning and matches the Wi-Fi fingerprint of the network device 01, and this indicates that the user carrying the mobile phone 10 may approach to the living room, so that the mobile phone 10 switches from the periodicity 001 with long interval scanning time to the periodicity 002 with short interval scanning time, to increase a scanning frequency, and performs single-channel scanning based on the Wi-Fi channel of the network device 01 that is historically accessed, to reduce scanning power consumption. Before the user goes upstairs or enters the living room, because the mobile phone 10 uses a high-frequency scanning manner for the network device 01 to access the channel, when the mobile phone 10 enters signal coverage of the network device 01, the mobile phone 10 may immediately detect the network device 01 through scanning and automatically access the Wi-Fi network provided by the network device 01, thereby improving a reconnection speed of the Wi-Fi network of the mobile phone 10 and meeting a network connection requirement of the user for the mobile phone 10.

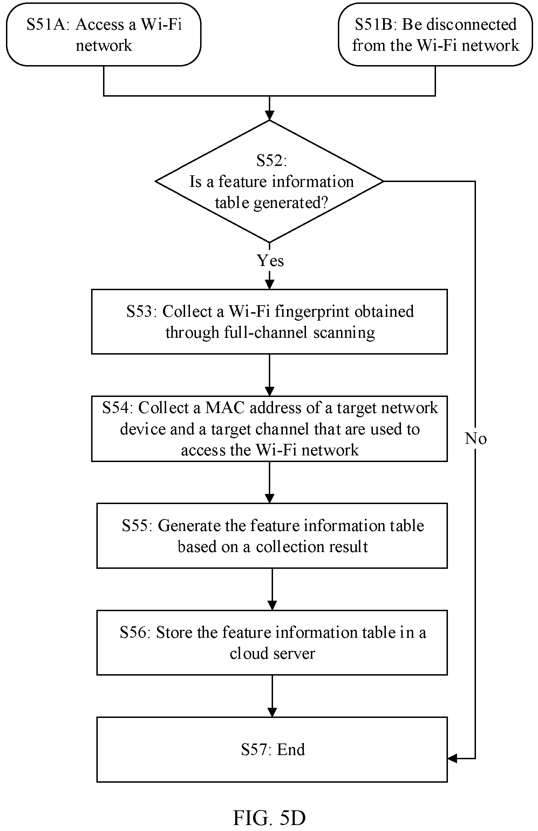

FIG. 5D is a schematic flowchart of generating a feature information table according to some embodiments of this application. The following steps are specifically included.

S51A: A mobile phone 10 accesses a Wi-Fi network.

In some embodiments, when it is detected that the mobile phone 10 accesses the Wi-Fi network, whether the mobile phone needs to generate a feature information table is determined, and a determining result A is generated.

S51B: The mobile phone 10 is disconnected from the Wi-Fi network.

In some embodiments, when it is detected that the mobile phone 10 is disconnected from the Wi-Fi network, whether the mobile phone needs to generate a feature information table is determined, and a determining result B is generated.

S52: Determine whether to generate the feature information table.

In some embodiments, when accessing the Wi-Fi network and being disconnected from the Wi-Fi network, the mobile phone 10 may prompt, through an information pop-up window, a user whether to generate the feature information table, so that the user may determine, through the information pop-up window, whether to generate the feature information table. For example, when the mobile phone 10 accesses the Wi-Fi network, if the mobile phone 10 detects that the user determines, through the information pop-up window, that the feature information table needs to be generated, the determining result A is that the feature information table needs to be generated. Alternatively, for example, when the mobile phone 10 accesses the Wi-Fi network, if the mobile phone 10 detects, through the information pop-up window, that the user determines that the feature information table does not need to be generated, the determining result A is that the feature information table does not need to be generated. The determining result B is similar to the determining result A, and details are not described herein.

In some embodiments, when either of the determining result A and the determining result B is that the feature information table needs to be generated, step S53 is performed; or when both the determining result A and the determining result B are that the feature information table does not need to be generated, step S57 is performed, that is, the procedure ends.

S53: Collect a Wi-Fi fingerprint obtained by the mobile phone 10 through full-channel scanning.

In some embodiments, because the mobile phone 10 accesses and is disconnected from the Wi-Fi network at different time, that is, either of the determining result A and the determining result B is that the feature information table needs to be generated, step S53 may be separately performed.

For example, when the mobile phone 10 accesses the Wi-Fi network, if the determining result A is that the feature information table needs to be generated, when the mobile phone 10 accesses the Wi-Fi network, the Wi-Fi fingerprint obtained through full-channel scanning of the mobile phone 10 is collected. Further, when the mobile phone 10 is disconnected from the Wi-Fi network, is the determining result B is that the feature information table needs to be generated, when the mobile phone 10 is disconnected from the Wi-Fi network, the Wi-Fi fingerprint obtained through full-channel scanning of the mobile phone 10 is collected. That is, the Wi-Fi fingerprint obtained through full-channel scanning of the mobile phone 10 is collected when the mobile phone 10 accesses or is disconnected from the Wi-Fi network.

For another example, when the mobile phone 10 accesses the Wi-Fi network, if the determining result A is that the feature information table does not need to be generated, when the mobile phone 10 accesses the Wi-Fi network, the Wi-Fi fingerprint is not collected. Further, when the mobile phone 10 is disconnected from the Wi-Fi network, is the determining result B is that the feature information table needs to be generated, when the mobile phone 10 is disconnected from the Wi-Fi network, the Wi-Fi fingerprint obtained through full-channel scanning of the mobile phone 10 is collected. That is, the Wi-Fi fingerprint obtained through full-channel scanning of the mobile phone 10 is collected only when the mobile phone 10 is disconnected from the Wi-Fi network.

Alternatively, for example, when the mobile phone 10 accesses the Wi-Fi network, if the determining result A is that the feature information table needs to be generated, when the mobile phone 10 accesses the Wi-Fi network, the Wi-Fi fingerprint obtained through full-channel scanning of the mobile phone 10 is collected. Further, when the mobile phone 10 is disconnected from the Wi-Fi network, if the determining result B is that the feature information table does not need to be generated, when the mobile phone 10 is disconnected from the Wi-Fi network, the Wi-Fi fingerprint is not collected. That is, the Wi-Fi fingerprint obtained through full-channel scanning of the mobile phone 10 is collected only when the mobile phone 10 accesses the Wi-Fi network.

For a specific collection process, refer to the Wi-Fi fingerprint collection process described in FIG. 4. Details are not described herein.

S54: Collect a MAC address of a target network device and a target channel that are used by the mobile phone 10 to access the Wi-Fi network.

In some embodiments, a MAC address of a network device corresponding to the mobile phone 10 accessing the Wi-Fi network is used as the MAC address of the target network device, and a Wi-Fi channel that is of the corresponding network device and that is detected through scanning before the mobile phone 10 accesses the Wi-Fi network is used as the target channel.

S55: Generate the feature information table based on a collection result.

In some embodiments, the feature information table is generated based on the Wi-Fi fingerprint, the MAC address of the target network device, the target channel, and a state when the mobile phone 10 accesses or is disconnected from the Wi-Fi network, for example, a feature information table 50 in step S503.

S56: Store the feature information table in a cloud server.

In some embodiments, the feature information table is transferred to the cloud server, so that the user can share the feature information table with another terminal device of the user through the cloud server, and the user can also use the feature information table when using a terminal device other than the mobile phone 10.

S57: End. When storage of the feature information table is completed, or any determining result of accessing or being disconnecting from the Wi-Fi network by the mobile phone 10 is that the feature information table does not need to be generated, the procedure of generating the feature information table ends.

In some other embodiments, when the mobile phone 10 accesses or is disconnected from the Wi-Fi network provided by the target network device, the mobile phone 10 may collect both the Wi-Fi fingerprint and cell identity (Cell Identity, cell id) information of the mobile phone 10, and load, to the feature information table, a correspondence between a cell identity set, the Wi-Fi fingerprint, and the target network device that is currently accessed by the mobile phone 10, so that the mobile phone 10 may further switch a scanning periodicity of the mobile phone 10 by detecting a change of a cell identity.

The following explains and describes some other embodiments of this application with reference to the method shown in FIG. 5A and the scenario shown in FIG. 5B.

FIG. 6A-1 and FIG. 6A-2 are a flowchart of steps of another wireless communication method according to some embodiments of this application. The wireless communication method is applied to a mobile phone 10, and specifically includes the following steps.

S601: Detect a Wi-Fi connection mode of the mobile phone 10.

In some embodiments, whether the mobile phone 10 needs to initiate Wi-Fi scanning may be determined by detecting the Wi-Fi connection mode of the mobile phone 10.

For example, when it is detected that the Wi-Fi connection mode of the mobile phone 10 is connected, it indicates that the mobile phone 10 has accessed a Wi-Fi network, and does not need to initiate Wi-Fi scanning, step S601A is performed, and the procedure ends; or for example, when it is detected that the Wi-Fi connection mode of the mobile phone 10 is not connected, it indicates that the mobile phone 10 has not accessed a Wi-Fi network, and needs to initiate Wi-Fi scanning, and step S602 is performed.

S602: Detect whether a cell identity of the mobile phone 10 changes.

In some embodiments, when it is detected that the Wi-Fi connection mode of the mobile phone 10 is not connected, and the cell identity of the mobile phone 10 does not change, it indicates that the mobile phone 10 may stay at a location at which the Wi-Fi connection mode is not connected, and step S602A is performed.

S602A: Obtain a channel set of the mobile phone 10, and control the mobile phone 10 to perform full-channel scanning in a periodicity 003.

In some embodiments, for example, the mobile phone 10 stays at a location 10D shown in FIG. 5B, and there is no network device that can be scanned near the mobile phone 10. In this case, the channel set of the mobile phone 10 is obtained, and the mobile phone 10 is controlled to perform full-channel scanning based on the channel set in the periodicity 003.

The periodicity 003 is relative to a periodicity 002 and a periodicity 001 in FIG. 5A, and a scanning periodicity relationship of the periodicities is the periodicity 003>the periodicity 001>the periodicity 002. It may be understood that interval scanning time of the periodicity 003 is longest. For example, when one time of Wi-Fi scanning is performed at an interval of 120 seconds because the mobile phone 10 is currently not connected to the Wi-Fi network, and the cell identity of the mobile phone 10 does not change, it indicates that the mobile phone 10 may stay at a location at which the mobile phone 10 is not connected to the Wi-Fi network, that is, the mobile phone 10 cannot be connected to the Wi-Fi network. Therefore, the periodicity 003 with longest interval scanning time is used to perform Wi-Fi scanning, and power consumption of the mobile phone 10 can be reduced. In addition, because the mobile phone 10 is not connected to the Wi-Fi network in this case, a full-channel scanning manner is used, so that efficiency of detecting the network device through scanning by the mobile phone 10 can be improved.

In some other embodiments, when it is detected that the Wi-Fi connection mode of the mobile phone 10 is not connected, and the cell identity of the mobile phone 10 changes, it indicates that a user may carry the mobile phone 10 to move away from a location when the Wi-Fi connection mode is not connected, and step S602B is performed.

S602B: Obtain a feature information table of the mobile phone 10, and match a change result of the cell identity with the feature information table.

In some embodiments, when the mobile phone 10 accesses or is disconnected from a Wi-Fi network provided by a target network device, the feature information table corresponding to the target network device is generated by collecting a Wi-Fi fingerprint and a cell identity set of the mobile phone 10.

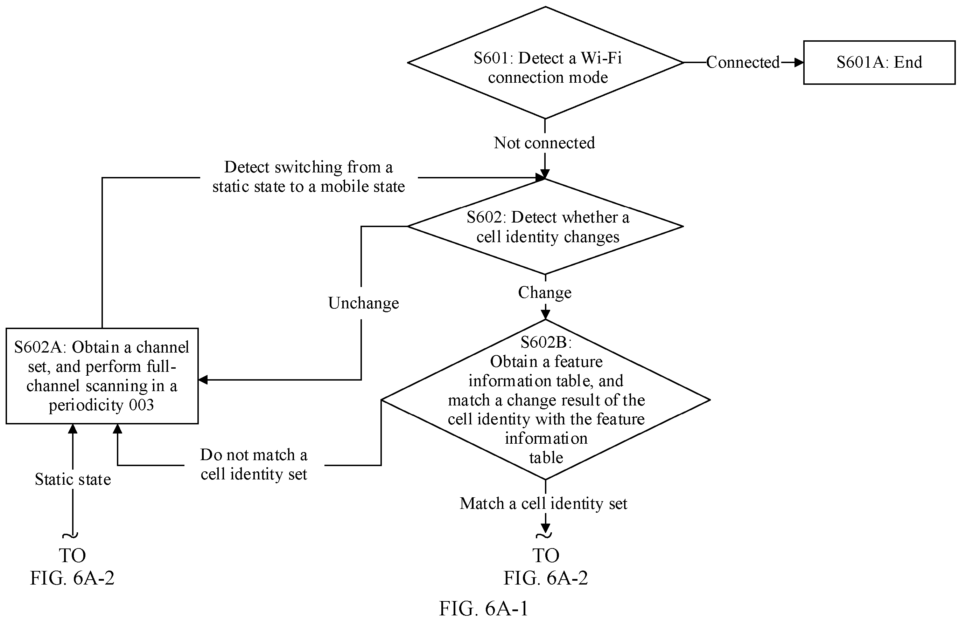

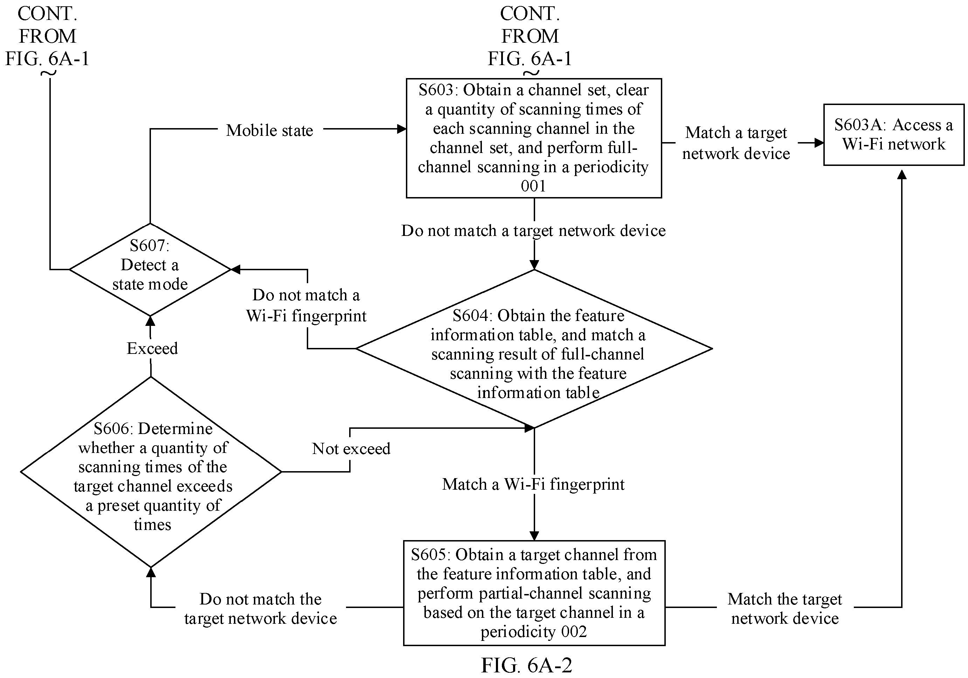

For example, as shown in FIG. 6B, a feature information table 60 includes a MAC address of the target network device, a target channel, a cell identity set, a Wi-Fi fingerprint, and a connected state. When the target network device corresponding to the mobile phone 10 is a network device 01, the MAC address of the target network device indicates a MAC address of the network device 01; the target channel indicates the Wi-Fi channel of the network device 01 accessed by the mobile phone 10; the cell identity set indicates a plurality of cell identities, for example, cell identities 1A, 1B, and 1C, collected when the mobile phone 10 accesses and is disconnected from the network device 01; the Wi-Fi fingerprint indicates MAC addresses of a plurality of network devices, for example, MAC addresses of network devices 01 to 07, collected when the mobile phone 10 accesses and is disconnected from the network device 01, and the MAC address of the network device 01 currently accessed by the mobile phone 10 is used as the MAC address of the target network device; and the connected state indicates that the mobile phone 10 accesses or is disconnected from the network device 01, where for example, 1 indicates that the mobile phone 10 accesses the network device 01, and 0 indicates that the mobile phone 10 is disconnected from the network device 01.

In some embodiments, in step S602B, as shown in FIG. 5B, when the user carrying the mobile phone 10 moves from a location 10D to a location 10C, and the mobile phone changes from a cell identity 1D to a cell identity 1C, that is, a change result is the cell identity 1C, and the change result matches the cell identity set in the feature information table, it indicates that there may be a network device that can be scanned near the mobile phone 10, and step S603 is performed, to be specific, the channel set of the mobile phone 10 is obtained; and after a quantity of scanning times of each scanning channel in the channel set is cleared, the mobile phone 10 is controlled to perform full-channel scanning in the periodicity 001, thereby improving efficiency of detecting the network device through scanning by the mobile phone 10, and ensuring efficiency of detecting the network device through scanning by the mobile phone 10.

In some embodiments, in step S603, when the mobile phone 10 detects the network device through full-channel scanning, and the network device is a network device that is historically accessed by the mobile phone 10, for example, when the network device 01 is detected through scanning, it indicates that the mobile phone 10 matches the target network device, and step S603A is performed, to be specific, the mobile phone 10 may automatically access the Wi-Fi network provided by the network device 01.

In some embodiments, in step S603, when the mobile phone 10 detects the network device through full-channel scanning, and the network device is a network device that is historically accessed by the mobile phone 10, for example, when the network device 01 is not detected through scanning, it indicates that the mobile phone 10 does not match the target network device, and step S604 is performed, to be specific, the feature information table of the mobile phone 10 is obtained, and a scanning result of full-channel scanning is matched with the feature information table.

In some embodiments, in step S604, when the MAC addresses of the plurality of network devices in the scanning result of full-channel scanning of the mobile phone 10 are partially the same as MAC addresses of a plurality of associated network devices in the Wi-Fi fingerprint, it is determined that the scanning result matches the Wi-Fi fingerprint, and step S605 is performed, to be specific, the target channel is obtained from the feature information table, and the mobile phone 10 is controlled to perform partial-channel scanning based on the target channel in the periodicity 002.

In some embodiments, in step S605, as shown in FIG. 5B, after the user carrying the mobile phone 10 moves from the location 10C to the location 10A, the mobile phone 10 detects the network device 01 through scanning, step S603A is performed, and the mobile phone 10 may automatically access the Wi-Fi network provided by the network device 01.

In some embodiments, in step S605, as shown in FIG. 5B, if the user carrying the mobile phone 10 moves from the location 10C to a direction away from the location 10A, for example, moves from the location 10C to the location 10D, the mobile phone 10 cannot detect the network device 01 through scanning, and the mobile phone 10 cannot automatically access the Wi-Fi network provided by the network device 01. In this case, step S606 is performed, to be specific, a quantity of scanning times of the target channel is recorded, and whether the quantity of scanning times of the target channel exceeds a preset quantity is determined.

In some embodiments, in step S606, when the mobile phone 10 does not detect the network device 01 through scanning, and the quantity of scanning times of the target channel does not exceed the preset quantity of times, it may indicate the user carrying the mobile phone 10 may move in a direction close to the network device 01, step S605 is performed, and the mobile phone 10 continues to perform Wi-Fi scanning through the target channel in the periodicity 002.

In some other embodiments, in step S604, when the MAC addresses of the plurality of network devices in the scanning result are different from the MAC addresses of the plurality of associated network devices in the Wi-Fi fingerprint, it is determined that the scanning result does not match the Wi-Fi fingerprint, and step S607 is performed.

In some other embodiments, in step S606, when the mobile phone 10 does not detect the network device 01 through scanning, and the quantity of scanning times of the target channel exceeds the preset quantity of times, it indicates that the user carrying the mobile phone 10 may move in a direction away from a signal of the network device 01, so that the mobile phone 10 cannot automatically access the Wi-Fi network provided by the network device 01 in short time. In this case, step S607 is performed.

S607: Detect a state mode of the mobile phone 10.

In some embodiments, when it is detected that the state mode of the mobile phone 10 is a mobile state, step S603 is performed, to be specific, a channel set of the mobile phone 10 is obtained; and after a quantity of scanning times of each scanning channel in the channel set is cleared, the mobile phone 10 is controlled to perform full-channel scanning in the periodicity 001.

It may be understood that, although the scanning result of the mobile phone 10 does not match the Wi-Fi fingerprint in step S604, the change result of the cell identity of the mobile phone 10 matches the cell identity set in step S602B. In addition, the mobile phone 10 is in the mobile state, and the mobile phone 10 may obtain another network device in the mobile state, to update the scanning result, so that the scanning result can match the Wi-Fi fingerprint or the target network device. That is, the mobile phone 10 may continue to perform full-channel scanning in the periodicity 001. Interval scanning time of the periodicity 001 is less than interval scanning time of the periodicity 003. The mobile phone 10 uses the full-channel scanning manner in the periodicity 001, so that efficiency of detecting the network device through scanning by the mobile phone 10 can be improved.

In some other embodiments, when it is detected that the state mode of the mobile phone 10 is a static state, step S602A is performed, to be specific, a channel combination of the mobile phone 10 is obtained, and the mobile phone 10 is controlled to perform full-channel scanning in the periodicity 003.

It may be understood that, in step S604, the scanning result of the mobile phone 10 does not match the Wi-Fi fingerprint, and the mobile phone 10 is in the static state, to be specific, the mobile phone 10 stays at a location at which the scanning result does not match the Wi-Fi fingerprint, that is, the mobile phone 10 cannot be connected to the Wi-Fi network. Therefore, the periodicity 003 with longest interval scanning time is used to perform Wi-Fi scanning, so that scanning power consumption of the mobile phone 10 can be reduced. In addition, because the mobile phone 10 is not connected to the Wi-Fi network in this case, a full-channel scanning manner is used, so that efficiency of detecting the network device through scanning by the mobile phone 10 can be improved.

In some embodiments, in step S602A, if it is detected that the mobile phone 10 switches from the static state to the mobile state, step S602 is performed, to be specific, whether the cell identity of the mobile phone 10 changes is detected.

It may be understood that, if the cell identity does not change, or the change result of the cell change does not match the cell identity set, or the full-channel scanning result does not match the Wi-Fi fingerprint and the mobile phone 10 is in the static state, or the quantity of scanning times of the target channel exceeds the preset quantity of times and the mobile phone 10 in the static state cannot be connected to the Wi-Fi network, the mobile phone 10 performs Wi-Fi scanning in the periodicity 003 with longest interval scanning time. If it is detected in the foregoing case that the mobile phone 10 switches from the static state to the mobile state, it indicates that the user carrying the mobile phone 10 may move away from the location at which the mobile phone 10 cannot be connected to the Wi-Fi network, and the mobile phone 10 may obtain another cell identity in the mobile state. In this case, whether the cell identity of the mobile phone 10 changes is re-detected, and step S602 is performed.

It may be understood that, in comparison with the procedure shown in FIG. 5A, in the procedure shown in FIG. 6A-1 and FIG. 6A-2, detection of the cell identity and the state mode of the mobile phone 10 is added, and a step of switching the scanning periodicity of the mobile phone 10 based on a detection result is performed, so that the mobile phone 10 may switch between the periodicity 001 and the periodicity 003. In addition, provided that the mobile phone 10 is in a power-on state, a cell identity of each signal base station in a signal area in which the mobile phone 10 is located can be obtained, that is, obtaining the cell identity by the mobile phone 10 does not increase power consumption of the mobile phone 10. In addition, in the periodicity 001 to the periodicity 003, the interval scanning time of the periodicity 003 is the longest. It may be understood that the mobile phone 10 can switch in the periodicity 001 to the periodicity 003 through cell identity detection, so that scanning power consumption of the mobile phone 10 can be effectively reduced. In addition, in a process of reconnection and scanning, the mobile phone 10 matches a plurality of features in the feature information table, so that the mobile phone 10 performs switching in a full-channel scanning manner, a single-channel scanning manner, or a multi-channel scanning manner while performing switching in the periodicity 001 to the periodicity 003, thereby further reducing scanning power consumption of the mobile phone 10, and improving efficiency of detecting the network device through scanning by the mobile phone 10 through periodic switching.

It may be understood that detection of the cell identity and the state mode of the mobile phone 10 in the flowchart shown in FIG. 6A-1 and FIG. 6A-2 is merely an example. In some other embodiments, detection of the cell identity and the state mode of the mobile phone 10 may be further applied to any scenario or a combination of any plurality of scenarios in FIG. 1 to FIG. 5D. This is not specifically limited.

FIG. 7 is a diagram of a structure of a mobile phone 10 according to some embodiments of this application.

It may be understood that the structure illustrated in embodiments of this application does not constitute a specific limitation on the mobile phone 10. In some other embodiments of this application, the mobile phone 10 may include more or fewer components than those shown in the figure, combine some components, split some components, or have different component arrangements. The components shown in the figure may be implemented by hardware, software, or a combination of software and hardware.

As shown in FIG. 7, the mobile phone 10 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on an instruction operation code and a time sequence signal, to complete control of instruction fetching and instruction execution. In some embodiments, the processor 110 may execute instructions corresponding to the wireless communication method provided in the foregoing embodiments.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the foregoing memory. This avoids repeated access, reduces waiting time of the processor 110, and improves processing efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 10.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to be connected to the processor 110 and a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 10. The processor 110 communicates with the display 194 through the DSI interface, to implement a display function of the mobile phone 10.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may be further configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the mobile phone 10, or may be configured to exchange data between the mobile phone 10 and a peripheral device, or may be configured to connect to a headset for playing audio through the headset. Alternatively, the interface may be configured to be connected to another electronic device, for example, an AR device.

It may be understood that an interface connection relationship between the modules shown in embodiments of this application is merely an example for description, and does not constitute a limitation on the structure of the mobile phone 10. In some other embodiments of this application, the mobile phone 10 may alternatively use an interface connection manner different from that in the foregoing embodiments, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the mobile phone 10. The charging management module 140 may further supply power to the mobile phone 10 through the power management module 141 while charging the battery 142.

The power management module 141 is configured to be connected the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone 10 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the mobile phone 10 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G/6G or the like and that is applied to the mobile phone 10. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the mobile phone 10 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the mobile phone 10 is coupled to the mobile communication module 150, and the antenna 2 is coupled to the wireless communication module 160, so that the mobile phone 10 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5G and a subsequent evolution standard, BT, a GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The mobile phone 10 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. In some embodiments, the mobile phone 10 may include one or N displays 194, where N is a positive integer greater than 1.

The mobile phone 10 may implement a photographing function through the ISP, the camera 193, the video codec, the GPU, the display 194, the application processor, and the like. The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 10 may include one or N cameras 193, where N is a positive integer greater than 1.

The digital signal processor is configured to process a digital signal, and may process another digital signal in addition to the digital image signal. For example, when the mobile phone 10 selects a frequency, the digital signal processor is configured to perform Fourier transform on energy of the frequency.

The video codec is configured to compress or decompress a digital video. The mobile phone 10 may support one or more video codecs. In this way, the mobile phone 10 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, with reference to a transfer mode between human brain neurons, and may further continuously perform self-learning. Applications such as intelligent cognition of the mobile phone 10, for example, image recognition, facial recognition, voice recognition, and text understanding, may be implemented through the NPU.

The external memory interface 120 may be configured to be connected to an external memory card, for example, a micro SD card, to extend a storage capability of the terminal device 100. The external memory card communicates with the processor 110 through the external memory interface 120, to implement a data storage function. For example, files such as music and a video are stored in the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data or a phone book) created during use of the mobile phone 10, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the mobile phone 10. For example, in some embodiments, the internal memory 121 may be configured to temporarily store instructions of the wireless communication method provided in the foregoing embodiments.

The mobile phone 10 may implement an audio function such as music playing or recording through the audio module 170, the speaker 170A, the receiver 170B, the microphone 170C, the headset jack 170D, the application processor, and the like.

The SIM card interface 195 is configured to be connected to a SIM card. The SIM card may be inserted into the SIM card interface 195 or removed from the SIM card interface 195, to implement contact with or separation from the mobile phone 10. The mobile phone 10 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external storage card. The mobile phone 10 interacts with a network through the SIM card, to implement functions such as calling and data communication. In some embodiments, the mobile phone 10 uses an eSIM, namely, an embedded SIM card. The eSIM card may be embedded in the mobile phone 10, and cannot be separated from the mobile phone 10.

FIG. 8 is a diagram of a structure of a terminal device 100 according to some embodiments of this application.

As shown in FIG. 8, the terminal device 100 includes a main processor 100A, a sensor 100B, a cellular chip 100C, a Wi-Fi chip 100D, a storage device 100E, another component 100F, and the like.

The main processor 100A is configured to: detect a Wi-Fi connection mode of the terminal device 100; detect whether a cell identity of the terminal device 100 changes; match a change result of the cell identity of the terminal device 100 with a feature information table; clear a quantity of scanning times of each scanning channel in a channel set of the terminal device 100; match a scanning result of full-channel scanning of the terminal device 100 with the feature information table; determine whether a quantity of scanning times of a target channel of the terminal device 100 exceeds a preset quantity; detect that the terminal device 100 switches from a static state to a mobile state; and the like. For a specific function of the main processor 100A and a method for implementing the specific function, refer to descriptions of the steps shown in FIG. 5A and FIG. 6A-1 and FIG. 6A-2.

The sensor 100B is configured to obtain a state mode of the terminal device 100, for example, the static state or the mobile state.

The cellular chip 100C is configured to obtain the cell identity of the terminal device 100, for example, a cell identity 1A, 1B, or 1C.

The Wi-Fi chip 100D is configured to obtain a scanning result of Wi-Fi scanning of the terminal device 100. For example, the scanning result may include network devices 01 to 09.

The storage device 100E is configured to store authentication information, an information feature table, a channel set, and the like that are used by the terminal device 100 to access a Wi-Fi network.

It may be understood that the structure illustrated in embodiments of this application does not constitute a specific limitation on the terminal device 100. In some other embodiments of this application, the terminal device 100 may include more or fewer components than those shown in the figure, combine some components, split some components, or have different component arrangements. The components shown in the figure may be implemented by hardware, software, or a combination of software and hardware.

In the accompanying drawings, some structure or method features may be shown in a particular arrangement and/or sequence. However, it should be understood that such a particular arrangement and/or sequence may not be needed. In some embodiments, these features may be arranged in a manner and/or sequence different from that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not indicate that there is not another unit/module in the foregoing device embodiments.

It should be noted that, in the examples and specification of this patent, relational terms such as first and second are merely used to distinguish one entity or operation from another entity or operation, and do not necessarily require or imply that there is any such actual relationship or sequence between these entities or operations. Moreover, the terms "include", "comprise", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

Although this application has been illustrated and described with reference to some preferred embodiments of this application, a person of ordinary skill in the art should understand that various changes may be made to this application in form and detail without departing from the scope of this application.

## Claims

1. A wireless communication method, comprising:
performing, by a terminal device, Wi-Fi scanning in a first scanning manner, wherein
a matching relationship between a Wi-Fi device detected through scanning by the terminal device and a Wi-Fi device in a stored first Wi-Fi fingerprint meets a first matching condition; and
performing, by the terminal device, Wi-Fi scanning in a second scanning manner, wherein a scanning interval of the first scanning manner is greater than a scanning interval of the second scanning manner.

2. The method according to claim 1, wherein the first Wi-Fi fingerprint is determined by using the following method:
accessing, by the terminal device, a first Wi-Fi signal provided by a first Wi-Fi device;
obtaining a plurality of second Wi-Fi devices detected through scanning by the terminal device; and
determining the first Wi-Fi fingerprint based on the first Wi-Fi device and the plurality of second Wi-Fi devices.

3. The method according to claim 1, wherein the first Wi-Fi fingerprint is determined by using the following method:
accessing, by the terminal device at first time, a first Wi-Fi signal provided by a first Wi-Fi device;
obtaining a plurality of second Wi-Fi devices detected through scanning by the terminal device at the first time; and
determining the first Wi-Fi fingerprint based on the first Wi-Fi device and the plurality of second Wi-Fi devices.

4. The method according to claim 2 or 3, further comprising:
being disconnected, by the terminal device at second time, from the first Wi-Fi signal provided by the first Wi-Fi device; and
using, as the second Wi-Fi devices, a plurality of Wi-Fi devices that are detected through scanning by the terminal device at the second time, to update the first Wi-Fi fingerprint.

5. The method according to claim 2 or 3, wherein that a matching relationship between a Wi-Fi device detected through scanning by the terminal device and a Wi-Fi device in a stored first Wi-Fi fingerprint meets a first matching condition comprises:
the Wi-Fi device detected through scanning by the terminal device comprises all or a part of the plurality of second Wi-Fi devices.

6. The method according to claim 1, 2, or 3, further comprising:
in correspondence to a case in which the matching relationship between the Wi-Fi device detected through scanning by the terminal device and the Wi-Fi device in the stored first Wi-Fi fingerprint does not meet the first matching condition, performing, by the terminal device, Wi-Fi scanning in the first scanning manner.

7. The method according to claim 2 or 3, wherein the performing, by a terminal device, Wi-Fi scanning in a first scanning manner comprises:
when the Wi-Fi device detected through scanning by the terminal device comprises the first Wi-Fi device, accessing, by the terminal device, the first Wi-Fi signal provided by the first Wi-Fi device; or
when the Wi-Fi device detected through scanning by the terminal device do not comprise the first Wi-Fi device, determining whether the matching relationship between the Wi-Fi device detected through scanning by the terminal device and the Wi-Fi device in the stored first Wi-Fi fingerprint meets the first matching condition.

8. The method according to claim 2 or 3, wherein the performing, by the terminal device, Wi-Fi scanning in a second scanning manner comprises:
in correspondence to a case in which the Wi-Fi device detected through scanning by the terminal device comprises the first Wi-Fi device, accessing, by the terminal device, the first Wi-Fi signal provided by the first Wi-Fi device.

9. The method according to claim 2 or 3, wherein Wi-Fi channels supported by Wi-Fi scanning of the terminal device comprise a plurality of first Wi-Fi channels; and
the first scanning manner comprises: performing Wi-Fi scanning based on the plurality of first Wi-Fi channels.

10. The method according to claim 9, wherein a Wi-Fi channel used by the terminal device to access the first Wi-Fi signal provided by the first Wi-Fi device is a second Wi-Fi channel, and the second Wi-Fi channel is any one of the plurality of first Wi-Fi channels; and
the second scanning manner comprises: performing Wi-Fi scanning based on the second Wi-Fi channel.

11. The method according to claim 10, wherein the performing, by the terminal device, Wi-Fi scanning in a second scanning manner comprises:
obtaining a first quantity of scanning times of performing Wi-Fi scanning by the terminal device based on the second Wi-Fi channel; and
in correspondence to a case in which the first quantity of scanning times does not exceed a first threshold, performing, by the terminal device, Wi-Fi scanning in the second scanning manner; or
in correspondence to a case in which the first quantity of scanning times exceeds the first threshold, performing, by the terminal device, Wi-Fi scanning in the first scanning manner.

12. The method according to claim 11, wherein before the performing, by a terminal device, Wi-Fi scanning in a first scanning manner, the method comprises:
when a matching relationship between a cell identity received by the terminal device and a cell identity in a stored first cell identity set meets a second matching condition,
performing, by the terminal device, Wi-Fi scanning in the first scanning manner.

13. The method according to claim 1, wherein the performing, by a terminal device, Wi-Fi scanning in a first scanning manner comprises:
when a matching relationship between a cell identity received by the terminal device and a cell identity in a stored first cell identity set does not meet a second matching condition,
performing, by the terminal device, Wi-Fi scanning in a third scanning manner, wherein a scanning interval of the third scanning manner is greater than the scanning interval of the second scanning manner.

14. The method according to claim 13, wherein the first cell identity set is determined by using the following method:
accessing, by the terminal device, a first Wi-Fi signal provided by a first Wi-Fi device;
obtaining a plurality of first cell identities received by the terminal device; and
determining the first cell identity set based on the plurality of first cell identities.

15. The method according to claim 14, wherein the first cell identity set is determined by using the following method:
accessing, by the terminal device at first time, a first Wi-Fi signal provided by a first Wi-Fi device;
obtaining a plurality of first cell identities received by the terminal device at the first time; and
determining the first cell identity set based on the plurality of first cell identities.

16. The method according to claim 14 or 15, further comprising:
being disconnected, by the terminal device at second time, from the first Wi-Fi signal provided by the first Wi-Fi device; and
using, as the first cell identities, a plurality of cell identities received by the terminal device at the second time, to update the first cell identity set.

17. The method according to claim 13, further comprising: the scanning interval of the third scanning manner is greater than or equal to the scanning interval of the first scanning manner.

18. The method according to claim 13, further comprising:
when a Wi-Fi channel used by the terminal device to perform Wi-Fi scanning in the second scanning manner is a second Wi-Fi channel, and
a first quantity of scanning times of performing Wi-Fi scanning by the terminal device based on the second Wi-Fi channel exceeds a first threshold,
in correspondence to a case in which the terminal device is in a mobile mode, performing, by the terminal device, Wi-Fi scanning in the second scanning manner; or
in correspondence to a case in which the terminal device is in a static mode, performing, by the terminal device, Wi-Fi scanning in the third scanning manner.

19. The method according to claim 13, further comprising:
when the matching relationship between the Wi-Fi device detected through scanning by the terminal device and the Wi-Fi device in the stored first Wi-Fi fingerprint does not meet the first matching condition,
in correspondence to a case in which the terminal device is in a mobile mode, performing, by the terminal device, Wi-Fi scanning in the second scanning manner; or
in correspondence to a case in which the terminal device is in a static mode, performing, by the terminal device, Wi-Fi scanning in the third scanning manner.

20. The method according to claim 18 or 19, wherein the performing, by the terminal device, Wi-Fi scanning in a third scanning manner comprises:
switching, by the terminal device, from the static mode to the mobile mode, and determining whether the matching relationship between the cell identity received by the terminal device and the cell identity in the stored first cell identity set meets the second matching condition.

21. The method according to claim 12, further comprising:
the first Wi-Fi fingerprint and/or the first cell identity set are/is stored in a cloud server.

22. A computer-readable storage medium, wherein the readable storage medium stores instructions; and when the instructions are executed on a terminal device, the terminal device is enabled to implement the method according to any one of claims 1 to 21.

23. A terminal device, comprising:
a memory, configured to store instructions executed by one or more processors of the terminal device; and
a processor, wherein the processor is one of the processors of the terminal device, and is configured to execute the instructions stored in the memory to implement the method according to any one of claims 1 to 21.
